# EUROPEAN PATENT APPLICATION

(11) **EP 2 523 197 A1**
(43) Date of publication of application: **14.11.2012**
(21) Application number: 10842053.0
(22) Date of filing: 09.12.2010
(51) Int. Cl.: H01F 27/28, H01F 17/04, H01F 30/00

(54) **COMPOSITE WOUND ELEMENT AND TRANSFORMER USING SAME, TRANSFORMATION SYSTEM, AND COMPOSITE WOUND ELEMENT FOR NOISE-CUT FILTER**

(30) Priority: 26.08.2010 JP 2010189734; 06.01.2010 JP 2010001283
(71) Applicant: Kabushiki Kaisha Kobe Seiko Sho, Kobe-shi, Hyogo 651-8585 (JP)
(72) Inventor: HASHIMOTO, Hiroshi, Hyogo 651-2271 (JP); MIYAZAKI, Takayoshi, Hyogo 651-2271 (JP); ZAITSU, Kyoji, Hyogo 651-2271 (JP); FUKUMOTO, Yoshito, Hyogo 651-2271 (JP); GOTO, Yuichiro, Hyogo 651-2271 (JP); NOGI, Toshihiro, Hyogo 651-2271 (JP); INOUE, Kenichi, Hyogo 651-2271 (JP); MITANI, Hiroyuki, Hyogo 651-2271 (JP); INOUE, Koji, Hyogo 651-2271 (JP)
(74) Representative: Müller-Boré & Partner Patentanwälte
(86) International application number: PCT/JP2010/007175
(87) International publication number: WO 2011/083533

(57) **Abstract**

Disclosed is a composite wound element (Tra) which is used in a transformer or a transformation system, and used as a composite wound element for a noise-cut filter, wherein a plurality of coils (1) are enclosed in a magnetic connection member (2a), and are configured by winding belt-like conductive members (11, 12, 13) so that the width direction of the conductive members (11, 12, 13) corresponds to the axial direction of the coils (1). The transformer, the transformation system, and the composite wound element for a noise-cut filter are provided with the composite wound element having the aforementioned structure. Thus, the composite wound element (Tra), the transformer, the transformation system, and the composite wound element for a noise-cut filter can be produced more easily than ever before.

## Description

### Technical Field

The present invention relates to composite wound elements including a plurality of wound elements (coils), and more particularly, to a composite wound element having the structure in which wound elements (coils) formed by winding belt-shaped conductive members are enclosed in a magnetic coupling member. The present invention also relates to a transformer, a transformation system, and a composite wound element for a noise-cut filter formed of the composite wound element.

### Background Art

Wound elements (coils) are formed by winding long conductors, and are arranged in circuits to provide inductance. Examples of wound elements include reactors used to introduce reactance into a circuit and transformers (voltage transformers and other transformers) that transmit energy between multiple wound wires by electromagnetic induction. Transformers are used in various electric circuits and electronic circuits to achieve, for example, voltage transformation, impedance matching, or current detection.

Of the above-described transformers, transformers that perform voltage transformation transmit electric energy from a primary coil to a secondary coil by electromagnetic induction, and are used not only in electric and electronic products but are also widely used in, for example, electric power systems. Such a transformer generally includes a primary coil, a secondary coil, and a core. The primary coil and the secondary coil are each formed by winding, for example, an annealed copper wire around the core. The annealed copper wire is coated with an insulating material and has a circular or rectangular cross section. The core is formed, for example, by stacking a plurality of thin silicon steel plates and serves as a magnetic circuit that couples the primary coil and the secondary coil by mutual inductance.

Patent Literature 1, for example, discloses an example of such a transformer. The transformer disclosed in Patent Literature 1 is formed by winding a belt-like magnetic steel sheet, cutting the magnetic steel sheet in the width direction, inserting two windings through the cut section, and fixing the windings by bonding the cut ends at the cut section together. In the transformer disclosed in Patent Literature 1, the magnetic steel sheet in the wound state corresponds to the core, and the windings correspond to the coils.

A DC-AC converter and a noise-cut filter unit are generally arranged between a direct-current power source and an alternating-current power system or between the direct-current power source and an alternating-current load. The DC-AC converter converts direct-current power output from the direct-current power source into alternating-current power. The noise-cut filter unit reduces or eliminates a noise component included in the alternating-current power output from the DC-AC converter. The noise component is, for example, a power component that distorts the sine wave. The noise-cut filter unit normally includes two wound elements (coils). One of the two wound elements is placed in a current path from the DC-AC converter to the alternating-current power system or the alternating-current load. The other wound element is placed in a current path from the alternating-current power system or the alternating-current load to the DC-AC converter.

In the above-described transformer according to the related art, to eliminate magnetic flux leakage to the outside and form a magnetic circuit that achieves efficient magnetic coupling between the primary coil and the secondary coil, the core has a circular-ring-shaped or rectangular-ring-shaped structure. Therefore, in the case where the primary coil and the secondary coil are formed by winding wires around the core having the ring-shaped structure, the process of winding the wires is complex because of the ring-shaped structure of the core, and it is difficult to increase the productivity. To facilitate the winding process, the core may be divided into a plurality of parts, and the parts may be assembled together to form the core having the ring-shaped structure after the winding process. Alternatively, as described in Patent Literature 1, the magnetic steel sheet in the wound state (core) may be cut in the width direction, and the cut ends may be bonded together after the windings are inserted. In these cases, the parts or the cut ends must be bonded together with low magnetic loss. In particular, according to Patent Literature 1, the end portions must be processed so that the cut ends are inclined at an angle of 50° to 70° with respect to the winding direction, and such a process is cumbersome.

As described above, the noise-cut filter unit includes two wound elements for a noise-cut filter. The wound elements are preferably integrated so that the number of surface mounted components can be reduced and the cost can be reduced accordingly. For this purpose, the structure of the two wound elements included in the noise-cut filter unit may be similar to that in the transformer. In this case, a situation similar to that in Patent Literature 1 occurs. In particular, in the case where the two wound elements are indirectly connected in series with the alternating-current power system or the alternating-current load interposed therebetween, the above-described flux loss (flux leakage) leads to a reduction in the coupling coefficient between the two wound elements, and the inductance of each wound element will be reduced.

### Citation List

### Patent Literature

PTL 1: Japanese Unexamined Patent Application Publication No. 2005-150507

### Summary of Invention

The present invention has been made in view of the above-described circumstances, and an object of the present invention is to provide a composite wound element and a transformer using the composite wound element, a transformation system, and a composite wound element for a noise-cut filter which can be more easily produced compared to those of the related art.

In a composite wound element, a transformer, a transformation system, and a composite wound element for a noise-cut filter according to the present invention, a plurality of coils are enclosed in a magnetic coupling member. The coils are each formed by winding a belt-shaped conductive member such that a width direction of the conductive member extends along an axial direction of the coils. The composite wound element, the transformer, the transformation system, and the composite wound element for a noise-cut filter having such a structure can be more easily produced compared to those of the related art.

The above and other objects, characteristics, and advantages of the present invention will become apparent from the following detailed description and the accompanying drawings.

### Brief Description of Drawings

[Fig. 1] Fig. 1 is a cross sectional view illustrating the structure of a transformer according to a first embodiment.
[Fig. 2] Fig. 2 is a vertical sectional view illustrating the structure of the transformer according to a first embodiment taken along line A-A in Fig. 1.
[Fig. 3] Fig. 3 is a vertical sectional view illustrating the structure of a transformer according to a second embodiment.
[Fig. 4] Fig. 4 is a vertical sectional view illustrating the structure of a transformer according to a third embodiment.
[Fig. 5] Fig. 5 illustrates a magnetic field in a transformer of Example 1.
[Fig. 6] Fig. 6 illustrates a magnetic field in a transformer of Example 2.
[Fig. 7] Fig. 7 illustrates a magnetic field in a transformer of Example 3.
[Fig. 8] Fig. 8 shows the coupling coefficients of transformers Tra1 to Trc1 of Examples 1 to 3.
[Fig. 9] Fig. 9 illustrates a method for producing a transformer according to a fourth embodiment.
[Fig. 10] Fig. 10 illustrates an interconnected power system including a composite wound element for a noise-cut filter according to a fifth or sixth embodiment.
[Fig. 11] Fig. 11 shows sectional views illustrating the structure of a composite wound element for a noise-cut filter according to the fifth embodiment.
[Fig. 12] Fig. 12 illustrates a magnetic field in the composite wound element for a noise-cut filter according to the fifth embodiment illustrated in Fig. 11.
[Fig. 13] Fig. 13 shows sectional views illustrating the structure of a composite wound element for a noise-cut filter according to the sixth embodiment.
[Fig. 14] Fig. 14 illustrates a magnetic field in the composite wound element for a noise-cut filter according to the sixth embodiment illustrated in Fig. 13.
[Fig. 15] Fig. 15 shows graphs for explaining the inductance characteristic of the composite wound element for a noise-cut filter according to the fifth embodiment.
[Fig. 16] Fig. 16 illustrates the structure of a coil portion according to a modification.

### Description of Embodiments

An embodiment of the present invention will now be described with reference to the drawings. In each figure, components denoted by the same reference numerals have the same structures, and explanations thereof will thus be omitted as appropriate. In this description, components are denoted by reference numerals without subscripts when they are described generically, and are denoted by reference numerals with subscripts when they are to be distinguished from each other.

A composite wound element according to the present embodiment includes a plurality of coils and a magnetic coupling member for magnetically coupling the coils. The coils are each formed by winding a belt-shaped conductive member such that a width direction of the conductive member extends along an axial direction of the coils, and are enclosed in the magnetic coupling member. In the composite wound element having the above-described structure, the magnetic coupling member surrounds the coils so that the coils are enclosed therein. Unlike the related art, it is not necessary to wind the coils around the magnetic coupling member, which corresponds to the core according to the related art. Therefore, the composite wound element can be more easily produced compared to that of the related art. In addition, in the composite wound element having the above-described structure, the magnetic coupling member surrounds the coils so that the coils are enclosed therein, and the magnetic flux leaks into the inner space of the magnetic coupling member. Therefore, the magnetic flux that is generated by the coils and passes through the magnetic coupling member is reduced, and the core loss (hysteresis loss) can be reduced accordingly. Therefore, even when the magnetic coupling member is formed of, for example, soft magnetic powder that causes a higher core loss than silicon steel plates, the core loss can be reduced in the composite wound element having the above-described structure. In the composite wound element having the above-described structure, the coils are each formed by winding a long belt-shaped conductive member such that the width direction of the conductive member extends along the axial direction of the coils. Therefore, in the case where the magnetic coupling member is shaped so as to sandwich the coils with two planes having the axial direction of the coils as the normal direction, the conductive members in the coils may be arranged substantially along the direction of the magnetic flux that is formed in the magnetic coupling member. As a result, eddy current loss can be reduced.

In first to fourth embodiments, transformers are described as examples of composite wound elements having the above-described structure. In fifth and sixth embodiments, composite wound elements for noise-cut filters are described as examples of composite wound elements having the above-described structure. Each embodiment will now be described in detail.

### (First Embodiment)

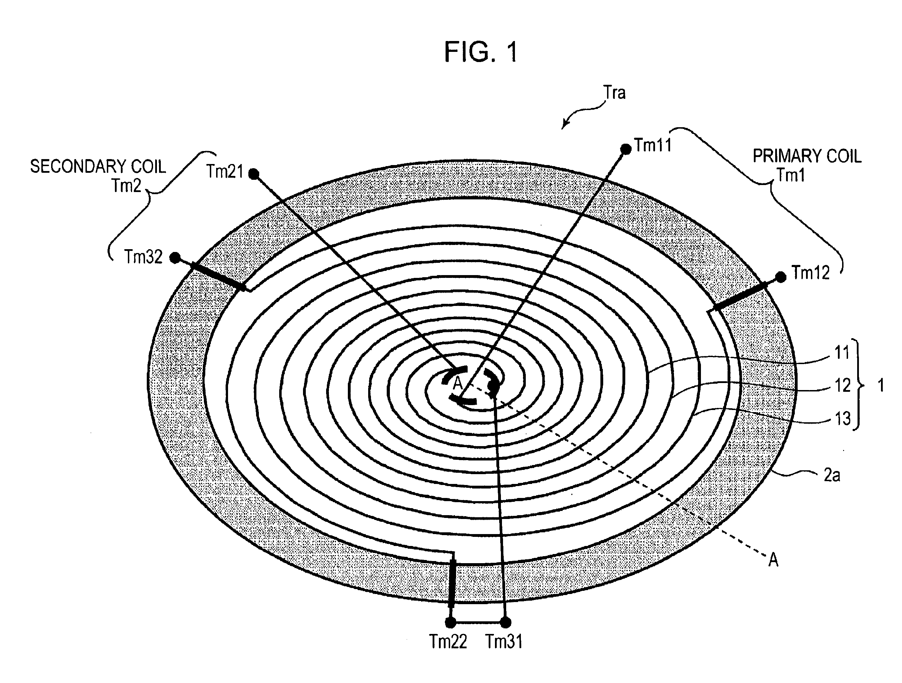

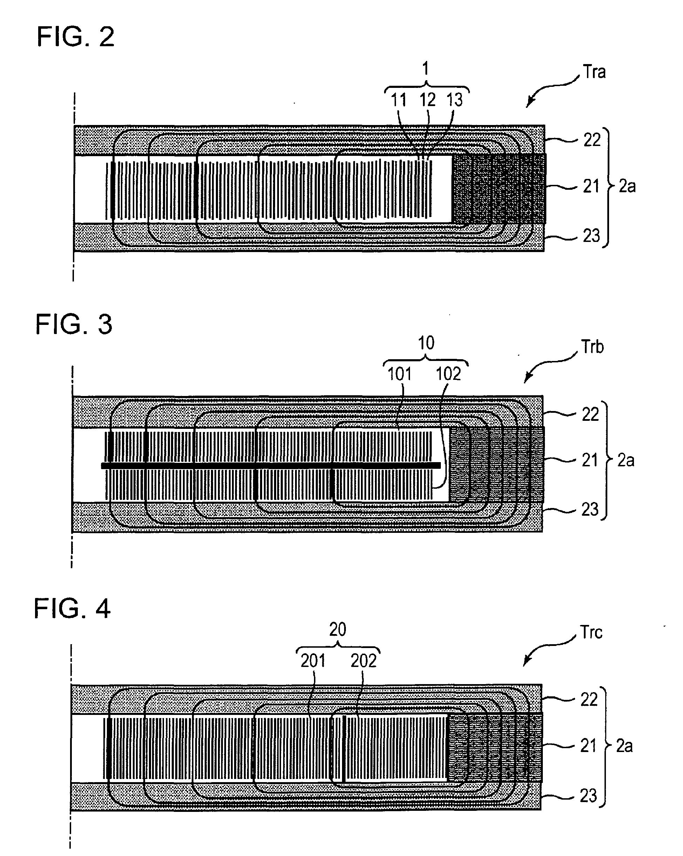

Fig. 1 is a cross sectional view illustrating the structure of a transformer according to a first embodiment. Fig. 2 is a vertical sectional view illustrating the structure of the transformer according to a first embodiment.

Referring to Figs. 1 and 2, a transformer Tra according to the first embodiment includes a plurality of coils 1 and a magnetic coupling member 2a for magnetically coupling the coils 1. The coils 1 are each formed by winding a belt-shaped conductive member such that the width direction of the conductive member extends along the axial direction of the coils 1, and are enclosed in the magnetic coupling member 2a.

More specifically, the coils 1 are formed by winding a plurality of long belt-shaped conductive members, which are stacked together with an insulating member (not shown) interposed therebetween, a predetermined number of turns. The long belt-shaped conductive members may be sheet-shaped, ribbon-shaped, or tape-shaped, and the ratio of the thickness (dimension in a thickness direction) t to the width (dimension in a width direction) is less than 1 (0<t/W<1).

The number of the plurality of coils 1 may be set to any number as appropriate in accordance with, for example, the use of the transformer Tra. In the example illustrated in Figs. 1 and 2, the coils 1 include three coils, which are first to third coils 11, 12, and 13. The first to third coils 11, 12, and 13 respectively include end portions Tm11 and Tm12; Tm21 and Tm22; and Tm31 and Tm32, which serve as connection terminals and extend to the outside of the magnetic coupling member 2a. A second end portion Tm22 of the second coil 12 and a first end portion Tm31 of the third coil are electrically connected to each other so that the second coil 12 and the third coil 13 form a single coil. In the transformer Tra illustrated in Figs. 1 and 2, the first coil 11 serves as a primary coil (or a secondary coil) in which the end portions Tm11 and Tm12 serve as connection terminals. The second and third coils 12 and 13 serve as a secondary coil (or a primary coil) in which a first end portion Tm21 of the second coil 12 and a second end portion Tm32 of the third coil 13 serve as connection terminals. When the number of the plurality of coils 1 is three or more, a plurality of secondary coils may be formed. Alternatively, a third coil, such as a feedback coil, may be formed in addition to the primary coil and the secondary coil.

When m and n are different integers of 1 or more, the coils 1 are formed by winding m+n belt-shaped conductive members that are stacked together with an insulating member interposed therebetween. The m conductive members are connected in series when m is 2 or more, and the n conductive members are connected in series when n is 2 or more. With this structure, the coils 1 form two (m:n) coils. Accordingly, the voltage ratio between the two coils in the voltage transformer Tra may be set to m:n. In the transformer Tra illustrated in Figs. 1 and 2, m is 2 and n is 1.

In the coils 1 having the above-described structure, the ratio of the thickness of the m conductive members to the thickness of the n conductive members is preferably n:m. In this case, mx(thickness of the m conductive members) is equal to nx(thickness of the n conductive members), and the coils (the primary coil and the secondary coil) have the same thickness. Thus, the transformer Tra including the coils having the same thickness is provided.

The magnetic coupling member 2a magnetically couples the coils 1, and is configured to enclose the coils 1. In the example illustrated in Figs. 1 and 2, the magnetic coupling member 2a includes a first magnetic coupling member 21 that is arranged to cover the outer periphery of the coils 1 and second and third magnetic coupling members 22 and 23 that are connected to the first magnetic coupling member 21 so as to cover both end portions of the coils 1. Thus, the transformer Tra has a so-called pot-shaped structure in which the coils 1 are surrounded by the first to third magnetic coupling members 21 to 23.

More specifically, the first magnetic coupling member 21 has a hollow columnar shape (cylindrical shape) having an inner diameter such that the coils 1 can be enclosed therein. The second and third magnetic coupling members 22 and 23 are discs having an outer diameter larger than the inner diameter of the first magnetic coupling member 21. The second magnetic coupling member 22 is connected to the first magnetic coupling member 21 at an end thereof substantially without leaving a gap therebetween. The third magnetic coupling member 23 is connected to the first magnetic coupling member 21 at the other end thereof substantially without leaving a gap therebetween. Thus, the second magnetic coupling member 22 serves as an upper coupling member that closes (seals) the upper portion (upper surface, top surface) of the first magnetic coupling member 21, and the third magnetic coupling member 23 serves as a lower coupling member that closes (seals) a lower portion (lower surface, bottom surface) of the first magnetic coupling member 21.

In the example illustrated in Figs. 1 and 2, the magnetic coupling member 2a is formed of the first to third magnetic coupling members 21 to 23. However, the magnetic coupling member 2a is not limited to this. For example, one of the second and third magnetic coupling members 22 and 23 may be formed integrally with the first magnetic coupling member 21. Alternatively, for example, the first magnetic coupling member 21 may be vertically divided into a first upper magnetic coupling member and a first lower magnetic coupling member. In this case, the second magnetic coupling member 22 may be integrated with the first upper magnetic coupling member, and the third magnetic coupling member 23 may be integrated with the first lower magnetic coupling member. In this structure, the magnetic coupling member 2a is formed by connecting the first upper magnetic coupling member and the first lower magnetic coupling member after the coils 1 are placed therein.

The magnetic coupling member 2a has a predetermined magnetic characteristic (magnetic permeability) in accordance with, for example, the specification. The magnetic coupling member 2a is preferably formed of soft magnetic powder to ensure easy molding for obtaining the above-described desired shape. In the transformer Tra having the above-described structure, the magnetic coupling member 2a can be easily formed and the core loss can be reduced. More preferably, the magnetic coupling member 2a is formed of a mixture of soft magnetic powder and non-magnetic powder. The mixing ratio between the soft magnetic powder and the non-magnetic powder can be relatively easily adjusted. The above-described predetermined magnetic characteristic of the magnetic coupling member 2a can be relatively easily set to a desired magnetic characteristic by appropriately adjusting the mixing ratio. The first to third magnetic coupling members 21 to 23 are preferably formed of the same material to reduce the cost.

The soft magnetic powder is powder of ferromagnetic metal. More specifically, for example, the soft magnetic powder may be pure iron powder, powder of iron-base alloy (Fe-Al alloy, Fe-Si alloy, sendust, permalloy, etc.), amorphous powder, or iron powder that is surface-coated with an electrical insulating film, such as a phosphoric acid-based chemical film. These soft magnetic powders may be produced by forming fine particles by a known method, such as an atomizing method, or by pulverizing, for example, iron oxide and reducing the pulverized iron oxide. The soft magnetic powder is preferably a metal material, such as the above-mentioned pure iron powder, powder of iron base alloy, or amorphous powder, because the saturation flux density is generally high when the magnetic permeability is constant.

The magnetic coupling member 2a made of the soft magnetic powder can be formed by known ordinary means, such as compacting.

The above-described transformer Tra may be formed by, for example, the following steps. That is, first, the same number of belt-shaped conductive members as the number of coils are prepared. The belt-shaped conductive members have a predetermined thickness t and are coated with an insulating material. In the following description, it is assumed that three conductive members are prepared to produce the transformer Tra illustrated in Figs. 1 and 2. The steps described herein can, of course, be similarly performed irrespective of the number of conductive members. The three conductive members that are coated with the insulating material are successively placed on top of each other (successively stacked). The three conductive members in the stacked state are wound a predetermined number of turns from positions spaced from the center (axial center) by a predetermined distance. Thus, air-core coils 1 (first to third coils 11 to 13) having a columnar air core portion at the center is formed. The columnar air core portion has a predetermined diameter (twice the above-described predetermined distance).

The coils 1 having the above-described structure are placed in the first magnetic coupling member 21 such that the axis thereof (axis of each of the first to third coils 11 to 13) extends substantially parallel to, or coincides with, the axis of the first magnetic coupling member 21. Then, the second magnetic coupling member 22 is connected to the top end of the first magnetic coupling member 21, and the third magnetic coupling member 23 is connected to the bottom end of the first magnetic coupling member 21. In this step, both end portions of each of the first to third coils 11 to 13 are pulled out of the first to third magnetic coupling members 21 to 23.

Then, the second end portion Tm22 of the second coil 12 is electrically connected to the first end portion Tm31 of the third coil 13, so that the second coil 12 and the third coil 13 form a single coil. Thus, the transformer Tra including a primary coil and a secondary coil is produced. As described above, the primary coil is formed of either the first coil 11 or the second and third coils 12 and 13, and the secondary coil is formed of either the second and third coils 12 and 13 or the first coil 11.

In the transformer Tra having the above-described structure, when alternating-current power is supplied to the primary coil, a magnetic field is generated by the primary coil. In the magnetic field, the magnetic flux passes through the first magnetic coupling member 21 and the third magnetic coupling member 23, and leaks into the inner space, that is, the space between the third magnetic coupling member 23 and the second magnetic coupling member 22. Accordingly, the magnetic flux passes through the first to third coils 11 to 13. Then, the magnetic flux passes through the second magnetic coupling member 22, and returns to the first magnetic coupling member 21. Thus, the secondary coil is magnetically coupled with the primary coil by the magnetic coupling member 2a. The alternating-current power supplied to the primary coil is transmitted to the secondary coil by electromagnetic induction, and a predetermined voltage is induced in the secondary coil. The magnetic flux of the magnetic field generated by the primary coil may leak from the magnetic coupling member 2a. Even when the magnetic flux leaks from the magnetic coupling member 2a, the secondary coil can be magnetically coupled with the primary coil by the magnetic coupling member 2a since the secondary coil is enclosed in the magnetic coupling member 2a. The direction of the magnetic field depends on the direction in which the current flows through the primary coil. The magnetic coupling member 2a has a substantially rectangular cross section along a plane including the axis of the first to third coils 11 to 13. In other words, the magnetic coupling member 2a is shaped so as to sandwich the coils 30 with two planes having the axial direction of the first to third coils 11 to 13 as the normal direction, the two planes being the inner upper surface of the magnetic coupling member 2a (ceiling surface or lower surface of the second magnetic coupling member 22) and the inner lower surface of the magnetic coupling member 2a (bottom surface, floor surface, or upper surface of the third magnetic coupling member 23). The first to third coils 11 to 13 are each formed by winding a belt-shaped conductive member such that the width direction of the conductive member extends along the axial direction of the coils 1, and are disposed in the first magnetic coupling member 21 such that the axis of the first magnetic coupling member 21 extends substantially parallel to the axis of each of the first to third coils 11 to 13. Therefore, in the space between the third magnetic coupling member 23 and the second magnetic coupling member 22, each of the conductive members that form the first to third coils 11 to 13 extends substantially along the magnetic flux.

As described above, in the transformer Tra according to the present embodiment, the magnetic coupling member 2a surrounds the coils 1 so that the coils 1 are enclosed therein. Unlike the related art, it is not necessary to wind the coils 1 around the magnetic coupling member 2a, which corresponds to the core according to the related art. Therefore, the transformer Tra having the above-described structure can be more easily produced compared to that of the related art. In addition, in the transformer Tra having the above-described structure, the magnetic coupling member 2a surrounds the coils 1 so that the coils 1 are enclosed therein, and the magnetic flux leaks into the inner space of the magnetic coupling member. Therefore, the magnetic flux that is generated by the coils 1 and passes through the magnetic coupling member is reduced. As a result, in the transformer Tra having the above-described structure, the core loss (hysteresis loss) can be reduced. Therefore, even when the magnetic coupling member 2a is formed of, for example, soft magnetic powder that causes a higher core loss than silicon steel plates as in the present embodiment, the core loss can be reduced. In the transformer Tra having the above-described structure, the magnetic coupling member 2a has a substantially rectangular cross section along a plane including the axis of the coils 1. In addition, the coils 1 are formed by winding long belt-shaped conductive members such that the width direction of the conductive members extends along the axial direction of the coils 1. Therefore, the conductive members in the coils 1 may be arranged substantially along the direction of the magnetic flux that is formed in the magnetic coupling member 2a. As a result, eddy current loss can be reduced in the transformer Tra having the above-described structure.

In the transformer Tra according to the present embodiment, the coils 1 (first to third coils 11 to 13) are formed by winding the belt-shaped conductive members that are stacked together with the insulating member interposed therebetween. Thus, the coils 1 can be formed by a single winding process, and the transformer Tra having the above-described structure can be easily produced.

Another embodiment will now be described.

### (Second Embodiment)

Fig. 3 is a vertical sectional view illustrating the structure of a transformer according to a second embodiment. In the transformer Tra according to the first embodiment, the coils 1 are formed by winding the belt-shaped conductive members that are stacked together with the insulating member interposed therebetween, and are enclosed in the magnetic coupling member 2a. As illustrated in Fig. 3, in a transformer Trb according to the second embodiment, a plurality of coils 10 are stacked in the axial direction of the coils 10, and are enclosed in a magnetic coupling member 2a. Fig. 3 illustrates the range from the center of the transformer Trb to the outer periphery thereof.

More specifically, each of the coils 10 is formed by winding a long belt-shaped conductive member a predetermined number of turns while an insulating member (not shown) is interposed between the adjacent portions of the conductive member. The number of the plurality of coils 10 may be set to any number as appropriate in accordance with, for example, the use of the transformer Trb. In the example illustrated in Fig. 3, the coils 10 include two coils, which are an upper coil 101 and a lower coil 102. Both end portions of each of the upper coil 101 and the lower coil 102 serve as connection terminals and extend to the outside of the magnetic coupling member 2a. The magnetic coupling member 2a in the transformer Trb of the second embodiment is similar to the magnetic coupling member 2a in the transformer Tra of the first embodiment, and explanations thereof are thus omitted.

The above-described transformer Trb may be formed by, for example, the following steps. That is, first, the same number of belt-shaped conductive members as the number of coils are prepared. The belt-shaped conductive members have a predetermined thickness t and are coated with an insulating material. In the following description, it is assumed that two conductive members are prepared to produce the transformer Trb illustrated in Fig. 3. The steps described herein can, of course, be similarly performed irrespective of the number of conductive members. Each of the two conductive members that are coated with the insulating material is wound a predetermined number of turns from a position spaced from the center (axial center) thereof by a predetermined distance. Thus, air-core coils (the upper coil 101 and the lower coil 102) having a columnar air core portion at the center is formed. The columnar air core portion has a predetermined diameter (twice the above-described predetermined distance).

The upper coil 101 and the lower coil 102 are placed on top of each other (stacked) in the axial direction so that the axes thereof coincide with each other. Then, the coils 10 including the upper coil 101 and the lower coil 102 are placed in the first magnetic coupling member 21 such that the axis thereof (axis of each of the upper coil 101 and the lower coil 102) extends substantially parallel to, or coincides with, the axis of the first magnetic coupling member 21. Then, the second magnetic coupling member 22 is connected to the top end of the first magnetic coupling member 21, and the third magnetic coupling member 23 is connected to the bottom end of the first magnetic coupling member 21. In this step, both end portions of each of the upper coil 101 and the lower coil 102 are pulled out of the first to third magnetic coupling members 21 to 23.

Thus, the transformer Trb including a primary coil and a secondary coil is produced. The primary coil is formed of the upper coil 101 or the lower coil 102, and the secondary coil is formed of the lower coil 102 or the upper coil 101.

In the transformer Trb having the above-described structure, when alternating-current power is supplied to the primary coil, a magnetic field is generated by the primary coil. In the magnetic field, the magnetic flux passes through the first magnetic coupling member 21 and the third magnetic coupling member 23, and leaks into the inner space, that is, the space between the third magnetic coupling member 23 and the second magnetic coupling member 22. Accordingly, the magnetic flux passes through the upper coil 101 and the lower coil 102. Then, the magnetic flux passes through the second magnetic coupling member 22, and returns to the first magnetic coupling member 21. Thus, the secondary coil is magnetically coupled with the primary coil by the magnetic coupling member 2a. The alternating-current power supplied to the primary coil is transmitted to the secondary coil by electromagnetic induction, and a predetermined voltage is induced in the secondary coil. The magnetic flux of the magnetic field generated by the primary coil may leak from the magnetic coupling member 2a. Even when the magnetic flux leaks from the magnetic coupling member 2a, the secondary coil can be magnetically coupled with the primary coil by the magnetic coupling member 2a since the secondary coil is enclosed in the magnetic coupling member 2a. The direction of the magnetic field depends on the direction in which the current flows through the primary coil. The magnetic coupling member 2a has a substantially rectangular cross section along a plane including the axis of the coils 10. In other words, the magnetic coupling member 2a is shaped so as to sandwich the coils 10 with two planes having the axial direction of the coils 10 as the normal direction, the two planes being the inner upper surface of the magnetic coupling member 2a (ceiling surface) and the inner lower surface of the magnetic coupling member 2a (bottom surface or floor surface). The upper coil 101 and the lower coil 102 included in the coils 10 are each formed by winding a belt-shaped conductive member such that the width direction of the conductive member extends along the axial direction of the coils 10, and are disposed in the first magnetic coupling member 21 such that the axis of the first magnetic coupling member 21 extends substantially parallel to the axis of the coils 10 (the axis of each of the upper coil 101 and the lower coil 102). Therefore, in the space between the third magnetic coupling member 23 and the second magnetic coupling member 22, each of the conductive members that form the upper coil 101 and the lower coil 102 extends substantially along the magnetic flux.

Accordingly, the transformer Trb of the second embodiment provides operational effects similar to those of the transformer Tra according to the first embodiment. More specifically, the transformer Trb according to the second embodiment can be more easily produced compared to that of the related art, and the core loss and the eddy current loss can be reduced. According to the second embodiment, the transformer Trb in which the coils 10 are stacked in the axial direction is provided.

Another embodiment will now be described.

### (Third Embodiment)

Fig. 4 is a vertical sectional view illustrating the structure of a transformer according to a third embodiment. In the transformer Tra according to the first embodiment, the coils 1 are formed by winding the belt-shaped conductive members that are stacked together with the insulating member interposed therebetween, and are enclosed in the magnetic coupling member 2a. As illustrated in Fig. 4, in a transformer Trb according to the third embodiment, a plurality of coils 20 are stacked in the radial direction of the coils 20, and are enclosed in a magnetic coupling member 2a. Fig. 4 illustrates the range from the center of the transformer Trb to the outer periphery thereof.

More specifically, each of the coils 20 is formed by winding a long belt-shaped conductive member a predetermined number of turns while an insulating member (not shown) is interposed between the adjacent portions of the conductive member. The number of the plurality of coils 20 may be set to any number as appropriate in accordance with, for example, the use of the transformer Trc. In the example illustrated in Fig. 4, the coils 20 include two coils, which are an inner coil 201 and an outer coil 202. Both end portions of each of the inner coil 201 and the outer coil 202 serve as connection terminals and extend to the outside of the magnetic coupling member 2a. The magnetic coupling member 2a in the transformer Trc of the third embodiment is similar to the magnetic coupling member 2a in the transformer Tra of the first embodiment, and explanations thereof are thus omitted.

The above-described transformer Trc may be formed by, for example, the following steps. That is, first, the same number of belt-shaped conductive members as the number of coils are prepared. The belt-shaped conductive members have a predetermined thickness t and are coated with an insulating material. In the following description, it is assumed that two conductive members are prepared to produce the transformer Trc illustrated in Fig. 4. The steps described herein can, of course, be similarly performed irrespective of the number of conductive members. One of the conductive members that are coated with the insulating material is wound a predetermined number of turns from a position spaced from the center (axial center) thereof by a predetermined first distance. Thus, an air-core coil (the inner coil 201) having a columnar air core portion at the center is formed. The columnar air core portion has a predetermined diameter (twice the above-described predetermined first distance). Subsequently, the other one of the two conductive members that are coated with the insulating material is wound a predetermined number of turns from a position spaced from the center (axial center) thereof by a predetermined second distance. Thus, an air-core coil (the outer coil 202) having a columnar air core portion at the center is formed. The columnar air core portion has a predetermined diameter (twice the above-described predetermined second distance). The predetermined second distance of the outer coil 202 is set such that the inner coil 201 can be placed in the columnar air core portion of the outer coil 202.

The inner coil 201 is placed in the columnar air core portion of the outer coil 202 such that the axis of the inner coil 201 coincides with the axis of the outer coil 202. Thus, the inner coil 201 and the outer coil 202 are superposed (stacked) in the radial direction of the coils 20. Then, the coils 20 including the inner coil 201 and the outer coil 202 are placed in the first magnetic coupling member 21 such that the axis thereof (axis of each of the inner coil 201 and the outer coil 202) extends substantially parallel to, or coincides with, the axis of the first magnetic coupling member 21. Then, the second magnetic coupling member 22 is connected to the top end of the first magnetic coupling member 21, and the third magnetic coupling member 23 is connected to the bottom end of the first magnetic coupling member 21. In this step, both end portions of each of the inner coil 201 and the outer coil 202 are pulled out of the first to third magnetic coupling members 21 to 23.

Thus, the transformer Trc including a primary coil and a secondary coil is produced. The primary coil is formed of the inner coil 201 or the outer coil 202, and the secondary coil is formed of the outer coil 202 or the inner coil 201.

In the transformer Trc having the above-described structure, when alternating-current power is supplied to the primary coil, a magnetic field is generated by the primary coil. In the magnetic field, the magnetic flux passes through the first magnetic coupling member 21 and the third magnetic coupling member 23, and leaks into the inner space, that is, the space between the third magnetic coupling member 23 and the second magnetic coupling member 22. Accordingly, the magnetic flux passes through the inner coil 201 and the outer coil 202. Then, the magnetic flux passes through the second magnetic coupling member 22, and returns to the first magnetic coupling member 21. Thus, the secondary coil is magnetically coupled with the primary coil by the magnetic coupling member 2a. The alternating-current power supplied to the primary coil is transmitted to the secondary coil by electromagnetic induction, and a predetermined voltage is induced in the secondary coil. The magnetic flux of the magnetic field generated by the primary coil may leak from the magnetic coupling member 2a. Even when the magnetic flux leaks from the magnetic coupling member 2a, the secondary coil can be magnetically coupled with the primary coil by the magnetic coupling member 2a since the secondary coil is enclosed in the magnetic coupling member 2a. The direction of the magnetic field depends on the direction in which the current flows through the primary coil. The magnetic coupling member 2a has a substantially rectangular cross section along a plane including the axis of the coils 20. In other words, the magnetic coupling member 2a is shaped so as to sandwich the coils 20 with two planes having the axial direction of the coils 20 as the normal direction, the two planes being the inner upper surface of the magnetic coupling member 2a (ceiling surface) and the inner lower surface of the magnetic coupling member 2a (bottom surface or floor surface). The inner coil 201 and the outer coil 202 included in the coils 20 are each formed by winding a belt-shaped conductive member such that the width direction of the conductive member extends along the axial direction of the coils 20, and are disposed in the first magnetic coupling member 21 such that the axis of the first magnetic coupling member 21 extends substantially parallel to the axis of the coils 20 (the axis of each of the inner coil 201 and the outer coil 202). Therefore, in the space between the third magnetic coupling member 23 and the second magnetic coupling member 22, each of the conductive members that form the inner coil 201 and the outer coil 202 extends substantially along the magnetic flux.

Accordingly, the transformer Trc of the third embodiment provides operational effects similar to those of the transformer Tra according to the first embodiment. More specifically, the transformer Trc according to the third embodiment can be more easily produced compared to that of the related art, and the core loss and the eddy current loss can be reduced. According to the third embodiment, the transformer Trc in which the coils 20 are stacked in the radial direction is provided.

Examples of transformers Tra to Trc according to the above-described first to third embodiments will now be described.

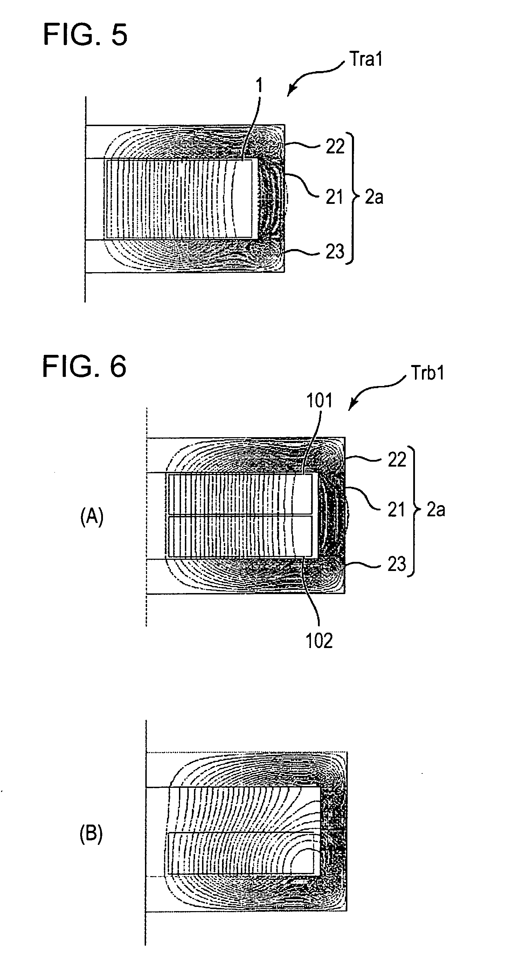

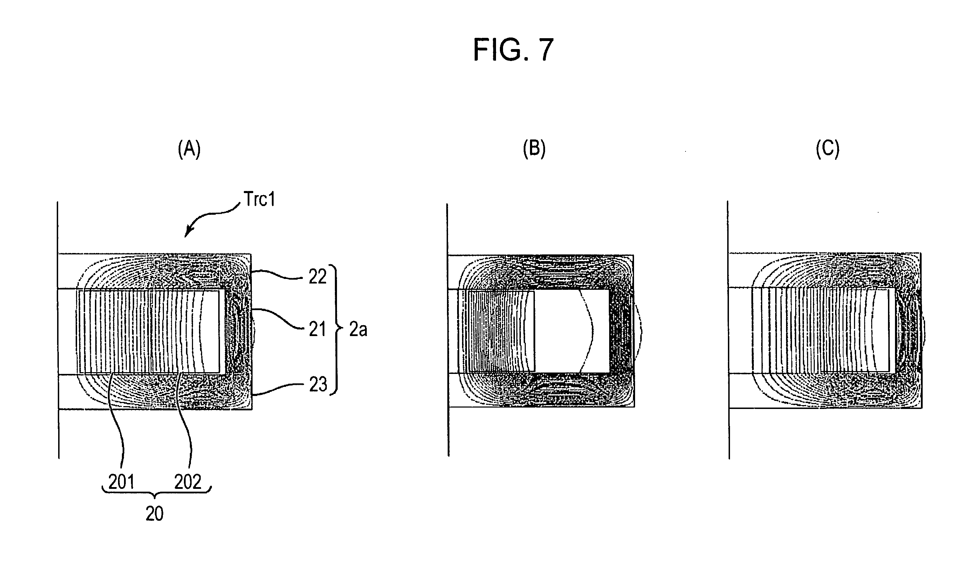

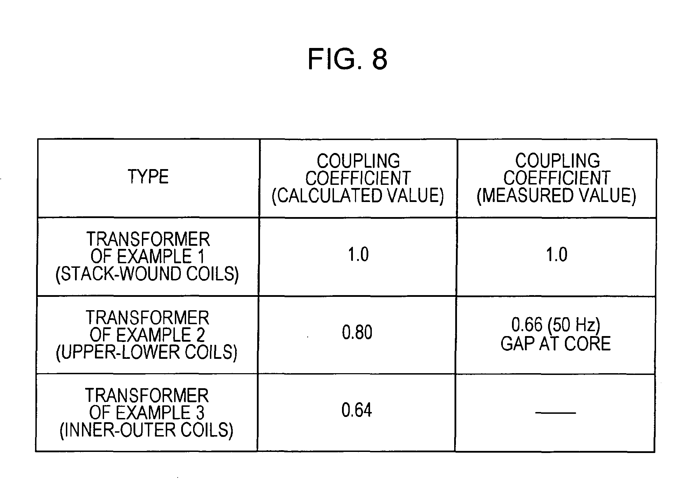

Fig. 5 illustrates a magnetic field in a transformer of Example 1. Fig. 6 illustrates a magnetic field in a transformer of Example 2. Fig. 7 illustrates a magnetic field in a transformer of Example 3. In Figs. 5 to 7, the solid lines show magnetic lines of force obtained by simulation (numerical calculation). Fig. 8 shows the coupling coefficients of transformers Tra1 to Trc1 of Examples 1 to 3. Fig. 8 shows both the calculated and measured coupling coefficients. For Example 3, only the calculated coupling coefficient is shown.

### (Example 1)

As Example 1, a transformer Tra1 was formed as an example of the transformer Tra according to the first embodiment. In Example 1, first, coils 1 having an inner diameter of 10 mm and an outer diameter of 75 mm were produced by stacking and winding three pieces of copper tape. The three pieces of copper tape each had a thickness t of 0.35 mm and a width of 20 mm, and were insulated with Kapton tape. The coils 1 were placed in a magnetic coupling member 2a, which had a cylindrical shape with a bottom and a cover. The magnetic coupling member 2a had an inner diameter of 78 mm and an outer diameter of 90 mm. Electrodes were attached to the end portions of each of the three pieces of copper tape, and the end portions were pulled out of the magnetic coupling member 2a. Two of the three pieces of copper tape were connected in series by using the electrodes. Thus, the transformer Tra1 of Example 1 was produced in which the coil formed of a single piece of copper tape served as the primary coil and the coil formed of two pieces of copper tape served as the secondary coil.

In the transformer Tra1 of Example 1 that was structured as described above, the inductance L1 of the primary coil was 118 µH, the inductance L2 of the secondary coil was 118 µH, the mutual inductance L+ between the primary coil and the secondary coil was 476 µH, and the coupling coefficient was 1.0 according to simulation. The measured value of the coupling coefficient was also 1.0.

In the transformer Tra1 of Example 1 having the above-described structure, when alternating-current power is supplied to the primary coil, a magnetic field is generated as illustrated in Fig. 5. In the magnetic field, the magnetic flux passes through the first magnetic coupling member 21 and the third magnetic coupling member 23, and leaks into the inner space, that is, the space between the third magnetic coupling member 23 and the second magnetic coupling member 22. Accordingly, the magnetic flux passes through the coils 1. Then, the magnetic flux passes through the second magnetic coupling member 22, and returns to the first magnetic coupling member 21. In the space between the third magnetic coupling member 23 and the second magnetic coupling member 22, the magnetic flux extends substantially along each of the conductive members in the coils 1. The magnetic flux leaks to the outside at the outer periphery of the first magnetic coupling member 21.

### (Example 2)

As Example 2, a transformer Trb1 was formed as an example of the transformer Trb according to the second embodiment. In Example 2, first, an upper coil 101 and a lower coil 102 having an inner diameter of 10 mm and an outer diameter of 75 mm were produced by winding two pieces of copper tape individually. The two pieces of copper tape each had a thickness t of 0.35 mm and a width of 10 mm, and were insulated with Kapton tape. Then, coils 10 were formed by stacking the upper coil 101 and the lower coil 102 in the axial direction such that the axes thereof coincide with each other. The coils 10 were placed in a magnetic coupling member 2a, which had a cylindrical shape with a bottom and a cover. The magnetic coupling member 2a had an inner diameter of 78 mm and an outer diameter of 90 mm. Electrodes were attached to the end portions of each of the two pieces of copper tape, and the end portions were pulled out of the magnetic coupling member 2a. Thus, the transformer Trb1 of Example 2 was produced in which the lower coil 102 formed of a single piece of copper tape served as the primary coil and the upper coil 101 formed of a single pieces of copper tape served as the secondary coil.

In the transformer Trb1 of Example 2 that was structured as described above, the inductance L1 of the primary coil was 132 µH, the inductance L2 of the secondary coil was 132 µH, the mutual inductance L+ between the primary coil and the secondary coil was 476 µH, and the coupling coefficient was 0.8 according to simulation. The measured value of the coupling coefficient was 0.66 at 50 Hz. The reason why the measured value of the coupling coefficient was lower than the result of the simulation is probably because a gap (air gap) was formed between the upper coil 101 and the lower coil 102.

In the transformer Trb1 of Example 2 having the above-described structure, when alternating-current power is supplied to the primary coil, a magnetic field is generated as illustrated in Fig. 6(A). In the magnetic field, the magnetic flux passes through the first magnetic coupling member 21 and the third magnetic coupling member 23, and leaks into the inner space, that is, the space between the third magnetic coupling member 23 and the second magnetic coupling member 22. Accordingly, the magnetic flux passes through the coils 10. Then, the magnetic flux passes through the second magnetic coupling member 22, and returns to the first magnetic coupling member 21. In the space between the third magnetic coupling member 23 and the second magnetic coupling member 22, the magnetic flux extends substantially along each of the conductive members in the coils 10.

Fig. 6(B) shows the result of simulation for the lower coil 102 performed to calculate the inductance L1 of the primary coil and the inductance L2 of the secondary coil.

### (Example 3)

As Example 3, a transformer Trc1 was formed as an example of the transformer Trc according to the third embodiment. In Example 3, first, an inner coil 201 having an inner diameter of 10 mm and an outer diameter of 42 mm and an outer coil 202 having an inner diameter of 43 mm and an outer diameter of 75 mm were produced by winding two pieces of copper tape individually. The two pieces of copper tape each had a thickness t of 0.35 mm and a width of 20 mm, and were insulated with Kapton tape. Then, coils 20 were formed by stacking the inner coil 201 and the outer coil 202 in the radial direction such that the axes thereof coincide with each other. The coils 20 were placed in a magnetic coupling member 2a, which had a cylindrical shape with a bottom and a cover. The magnetic coupling member 2a had an inner diameter of 78 mm and an outer diameter of 90 mm. Electrodes were attached to the end portions of each of the two pieces of copper tape, and the end portions were pulled out of the magnetic coupling member 2a. Thus, the transformer Trc1 of Example 3 was produced in which the inner coil 201 formed of a single piece of copper tape served as the primary coil and the outer coil 202 formed of a single pieces of copper tape served as the secondary coil.

In the transformer Trc1 of Example 3 that was structured as described above, the inductance L1 of the primary coil was 47.2 µH, the inductance L2 of the secondary coil was 281 µH, the mutual inductance L+ between the primary coil and the secondary coil was 476 µH, and the coupling coefficient was 0.64 according to simulation.

In the transformer Trb1 of Example 2 having the above-described structure, when alternating-current power is supplied to the primary coil, a magnetic field is generated as illustrated in Fig. 7(A). In the magnetic field, the magnetic flux passes through the first magnetic coupling member 21 and the third magnetic coupling member 23, and leaks into the inner space, that is, the space between the third magnetic coupling member 23 and the second magnetic coupling member 22. Accordingly, the magnetic flux passes through the coils 20. Then, the magnetic flux passes through the second magnetic coupling member 22, and returns to the first magnetic coupling member 21. In the space between the third magnetic coupling member 23 and the second magnetic coupling member 22, the magnetic flux extends substantially along each of the conductive members in the coils 20.

Fig. 7(B) shows the result of simulation for the inner coil 201 performed to calculate the inductance L1 of the primary coil. Fig. 7(C) shows the result of simulation for the outer coil 202 performed to calculate the inductance L2 of the secondary coil.

Fig. 8 shows the coupling coefficients of the transformers Tra1 to Trc1 of Examples 1 to 3. The mutual inductance L+ was 476 µH in all of the transformers Tra1 to Trc1. As is clear from Fig. 8, the coupling coefficient is high in the order of the transformer Tra1 of Example 1, the transformer Trb1 of Example 2, and the transformer Trc1 of Example 3. Thus, the transformer Tra1 of Example 1 is most advantageous.

### (Example 4)

As Example 4, a transformer Tra2 (not shown) was formed as an example of the transformer Tra according to the first embodiment. In Example 4, coils 1 were formed of four pieces of copper tape. In Example 4, first, coils 1 having an inner diameter of 49 mm and an outer diameter of 61 mm were produced by stacking and winding four pieces of copper tape. The four pieces of copper tape each had a thickness t of 0.2 mm and a width of 19 mm, and were insulated with Kapton tape. The coils 1 were placed in a magnetic coupling member 2a, which had a cylindrical shape with a bottom and a cover. The magnetic coupling member 2a had an inner diameter of 78 mm and an outer diameter of 90 mm. Electrodes were attached to the end portions of each of the four pieces of copper tape, and the end portions were pulled out of the magnetic coupling member 2a. Three of the four pieces of copper tape were connected in series by using the electrodes. Thus, the transformer Tra2 of Example 1 was produced in which the coil formed of a single piece of copper tape served as the primary coil and the coil formed of three pieces of copper tape served as the secondary coil.

An alternating-current voltage of 1 kHz, 4.6 Vp-p was applied to the primary coil in the transformer Tra2 of Example 4, and an alternating-current voltage of 13.6 Vp-p was induced in the secondary coil. The voltage induced in the secondary coil was about three times as high as the voltage applied to the primary coil.

Another embodiment will now be described.

### (Fourth Embodiment)

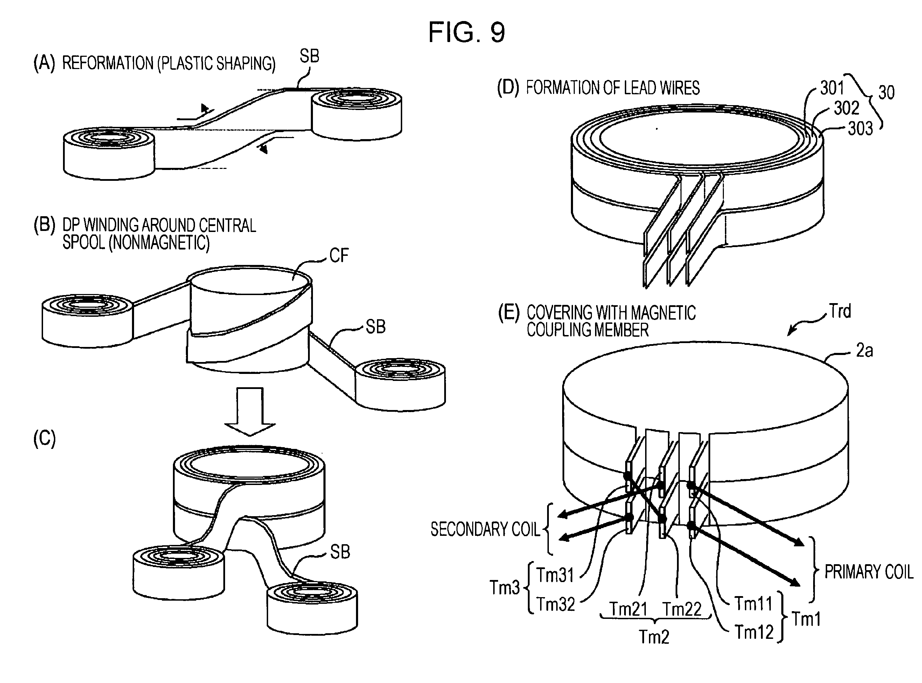

Fig. 9 illustrates a method for producing a transformer according to a fourth embodiment. Figs. 9(A) to 9(E) illustrate each step of the method. In the transformer Tra according to the first embodiment, the coils 1 are formed by winding the belt-shaped conductive members that are stacked together with the insulating member interposed therebetween, and are enclosed in the magnetic coupling member 2a. As illustrated in Figs. 9(D) and 9(E), in a transformer Trd according to the fourth embodiment, coils 30 having a double pancake structure are enclosed in a magnetic coupling member 2a.

More specifically, the coils 30 are similar to the coils 1 in the transformer tra1 according to the first embodiment except that the coils 30 have a so-called double pancake structure (flatwise winding structure) in which the belt-shaped conductive members in the stacked state are wound into two layers, that is, into an upper coil and a lower coil.

The magnetic coupling member 2a in the transformer Trd according to the fourth embodiment is similar to the magnetic coupling member 2a in the transformer Tra according to the first embodiment. The magnetic coupling member 2a includes a first magnetic coupling member 21 that is vertically divided into a first upper magnetic coupling member and a first lower magnetic coupling member, a second magnetic coupling member 22 integrated with the first upper magnetic coupling member, and a third magnetic coupling member 23 integrated with the first lower magnetic coupling member. The magnetic coupling member 2a is formed by connecting the first upper magnetic coupling member and the first lower magnetic coupling member after the coils 30 are placed therein.

The above-described transformer Trd may be formed by, for example, the following steps. That is, first, the same number of belt-shaped conductive members as the number of coils are prepared. The belt-shaped conductive members have a predetermined thickness t and are coated with an insulating material. In the following description, it is assumed that three conductive members are prepared to produce the transformer Trd illustrated in Fig. 9. The steps described herein can, of course, be similarly performed irrespective of the number of conductive members. The three conductive members that are coated with the insulating material are successively placed on top of each other (successively stacked). As illustrated in Fig. 9(A), the three conductive members in the stacked state (conductive member laminate SB) are wound from both ends thereof, and a central portion thereof is bent at a predetermined angle by, for example, plastic forming. The central portion is bent in a direction orthogonal to a longitudinal direction (width direction) in a plane including the belt-shaped conductive member laminate SB. Subsequently, as illustrated in Fig. 9(B), the bent portion is brought into contact with a peripheral surface of a central spool CF, and the conductive member laminate SB is wound along the peripheral surface of the central spool CF a predetermined number of turns from the contact point. Thus, the conductive member laminate SB is wound around the central spool CF into the DP structure, as illustrated in Fig. 9(C). After the conductive member laminate SB is wound around the central spool CF, the central spool CF is pulled out, as illustrated in Fig. 9(D). Thus, the coils 30 including first to third coils 301 to 303 are formed. Subsequently, as illustrated in Fig. 9(E), the coils 30 are placed in the magnetic coupling member 2a such that unwound portions of the conductive member laminate SB extend to the outside as connection terminals Tm1 to Tm3 of the first to third coils 301 to 303 and the axis of the coils 30 (axis of each of the first to third coils 301 to 303) extends substantially parallel to, or coincides with, the axis of the first magnetic coupling member 21. A second end portion Tm22 of the second coil 302 and a first end portion Tm31 of the third coil 303 are electrically connected to each other so that the second coil 302 and the third coil 303 form a single coil. In the transformer Trd illustrated in Fig. 9, the first coil 301 serves as a primary coil (or a secondary coil) in which end portions Tm11 and Tm12 serve as connection terminals. The second and third coils 302 and 303 serve as a secondary coil (or a primary coil) in which a first end portion Tm21 of the second coil 302 and a second end portion Tm32 of the third coil 303 serve as connection terminals. Thus, the transformer Trd according to the fourth embodiment is formed in which the coils 30 having the double pancake structure is enclosed in the magnetic coupling member 2a having a cylindrical shape with a bottom and a cover.

In the transformer Trd having the above-described structure, when alternating-current power is supplied to the primary coil, a magnetic field is generated by the primary coil. In the magnetic field, the magnetic flux passes through the first magnetic coupling member 21 and the third magnetic coupling member 23, and leaks into the inner space, that is, the space between the third magnetic coupling member 23 and the second magnetic coupling member 22. Accordingly, the magnetic flux passes through the coils 30. Then, the magnetic flux passes through the second magnetic coupling member 22, and returns to the first magnetic coupling member 21. Thus, the secondary coil is magnetically coupled with the primary coil by the magnetic coupling member 2a. The alternating-current power supplied to the primary coil is transmitted to the secondary coil by electromagnetic induction, and a predetermined voltage is induced in the secondary coil. The magnetic flux of the magnetic field generated by the primary coil may leak from the magnetic coupling member 2a. Even when the magnetic flux leaks from the magnetic coupling member 2a, the secondary coil can be magnetically coupled with the primary coil by the magnetic coupling member 2a since the secondary coil is enclosed in the magnetic coupling member 2a. The direction of the magnetic field depends on the direction in which the current flows through the primary coil. The magnetic coupling member 2a has a substantially rectangular cross section along a plane including the axis of the coils 30. In other words, the magnetic coupling member 2a is shaped so as to sandwich the coils 30 with two planes having the axial direction of the coils 30 as the normal direction, the two planes being the inner upper surface of the magnetic coupling member 2a (ceiling surface) and the inner lower surface of the magnetic coupling member 2a (bottom surface, floor surface). The coils 30 are each formed by winding a belt-shaped conductive member such that the width direction of the conductive member extends along the axial direction of the coils 30, and are disposed in the first magnetic coupling member 21 such that the axis of the first magnetic coupling member 21 extends substantially parallel to the axis of the coils 30. Therefore, in the space between the third magnetic coupling member 23 and the second magnetic coupling member 22, each of the conductive members that form the coils 30 extends substantially along the magnetic flux.

The transformer Trd according to the fourth embodiment provides operational effects similar to those of the transformer Tra according to the first embodiment. More specifically, the transformer Trd according to the fourth embodiment can be more easily produced compared to that of the related art, and the core loss and the eddy current loss can be reduced. According to the fourth embodiment, the coils 30 have the double pancake structure. Therefore, as illustrated in Fig. 9(E), the connection terminals Tm1 to Tm3 of the coils 30 may be arranged to extend to the outside at a single location.

In the above-described transformers Tr (Tra, Trb, Trc, and Trd), the thickness t of each conductive member is preferably less than or equal to 1/3 of the skin depth at the frequency of the alternating-current power applied to the transformers Tr. In the transformers Tr having such a structure, since the thickness t of each conductive member is less than or equal to one-third of the skin depth at the frequency of the alternating-current power, the eddy current loss can be reduced. When the angular frequency of the alternating-current power is ω, the magnetic permeability of the conductive members is µ, and the electrical conductivity of the conductive members is ρ, the skin depth δ is generally defined as δ= (2/ωµρ)1/2.

Preferably, the above-described transformers Tr further include a polymer material that fills the gap between the magnetic coupling member 2a and the coils 1. In the transformers Tr having such a structure, since the gap is filled with the polymer material, heat generated by the coils 1 can be transmitted to the magnetic coupling member 2a that surrounds the coils 1 through the polymer material. Accordingly, the heat dissipation effect can be improved. From this viewpoint, the polymer material is preferably a resin having a relatively high thermal conductivity (resin having a relatively high coefficient of conductivity). In the transformers Tr having such a structure, the polymer material also contributes to improving the insulation performance. In addition, in the transformers Tr having such a structure, the coils 1 are substantially fixed to the magnetic coupling member 2a by the polymer material, so that vibration due to magnetostriction can be prevented. An epoxy-based resin, which is highly adhesive, is an example of such a polymer material.

A transformation system may be formed by connecting in series a plurality of transformers which include at least one of the above-described transformers Tr. Since the transformation system having such a structure includes a plurality of transformers, voltage transformation can be successively performed by the transformers, so that a voltage applied to each transformer is reduced. Accordingly, the transformation system is effective against dielectric breakdown, and load applied to each transformer is reduced.

Other embodiments will now be described.

### (Fifth and Sixth Embodiments)

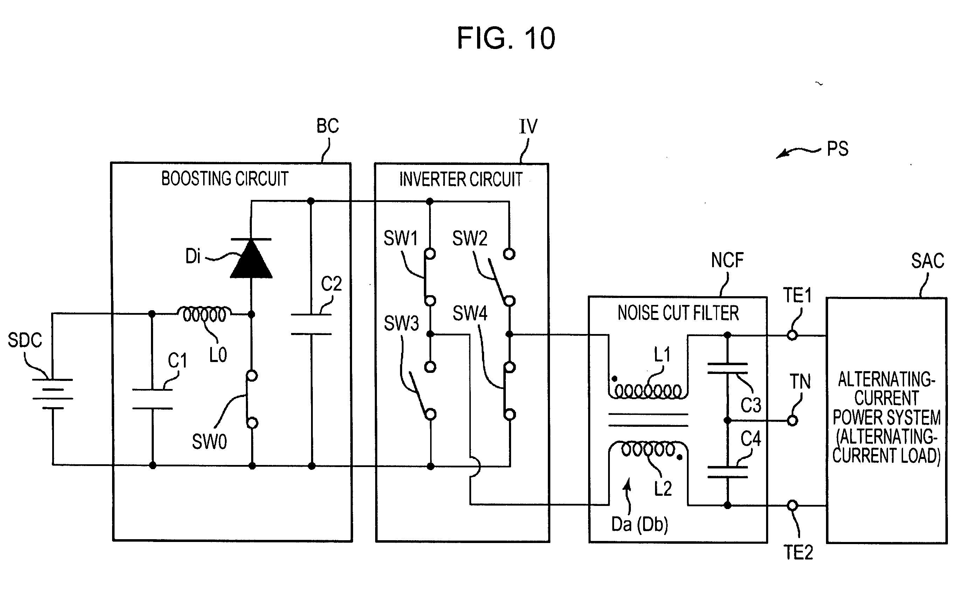

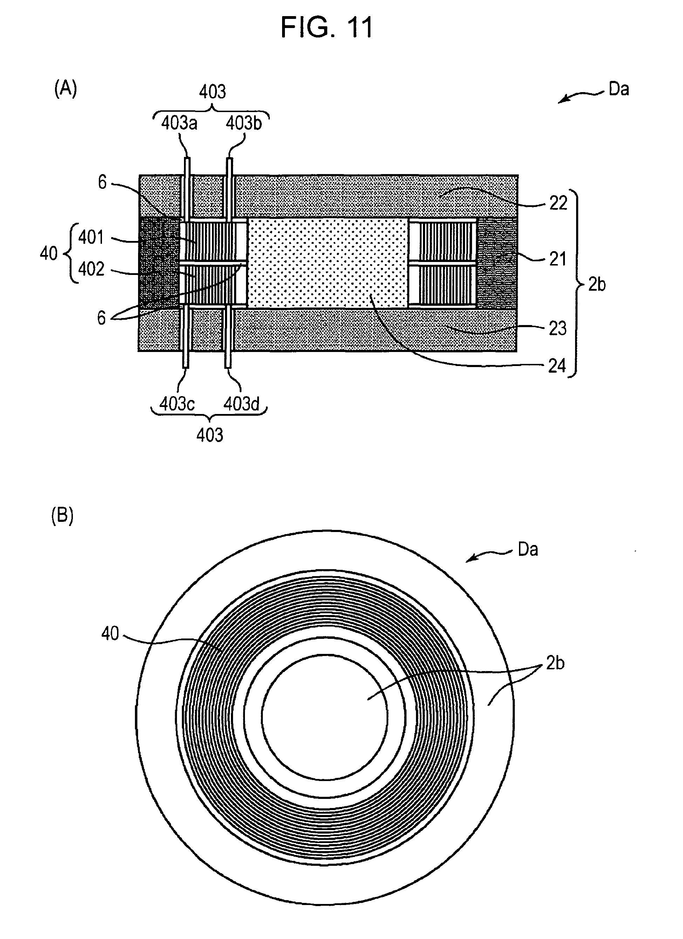

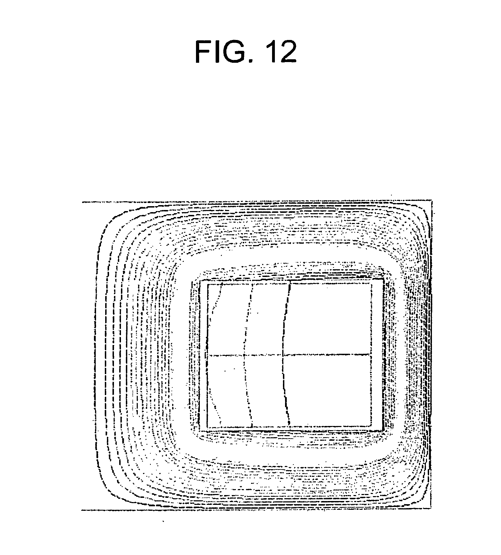

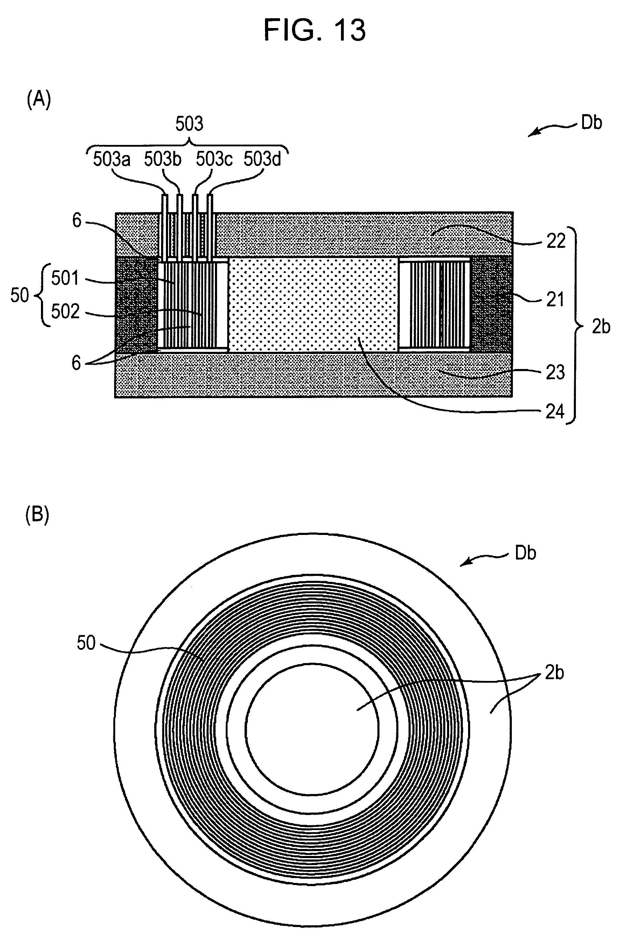

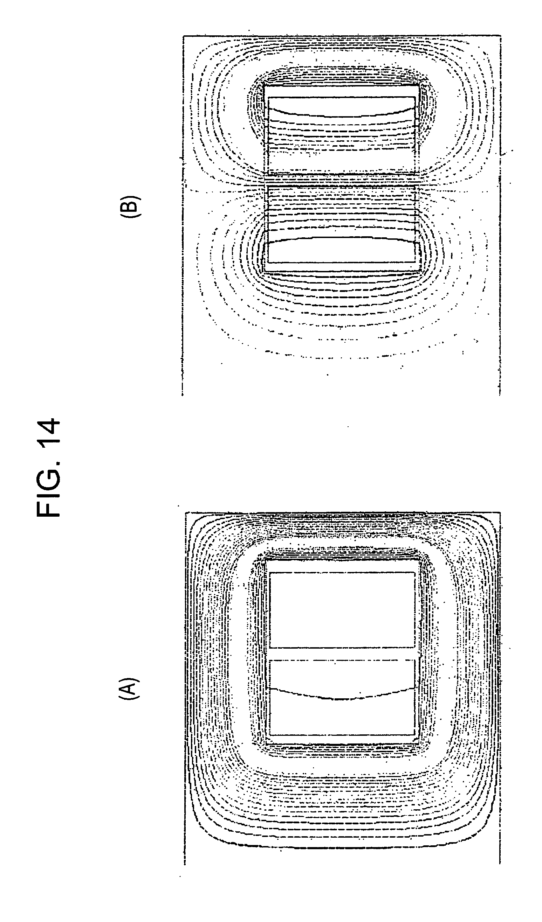

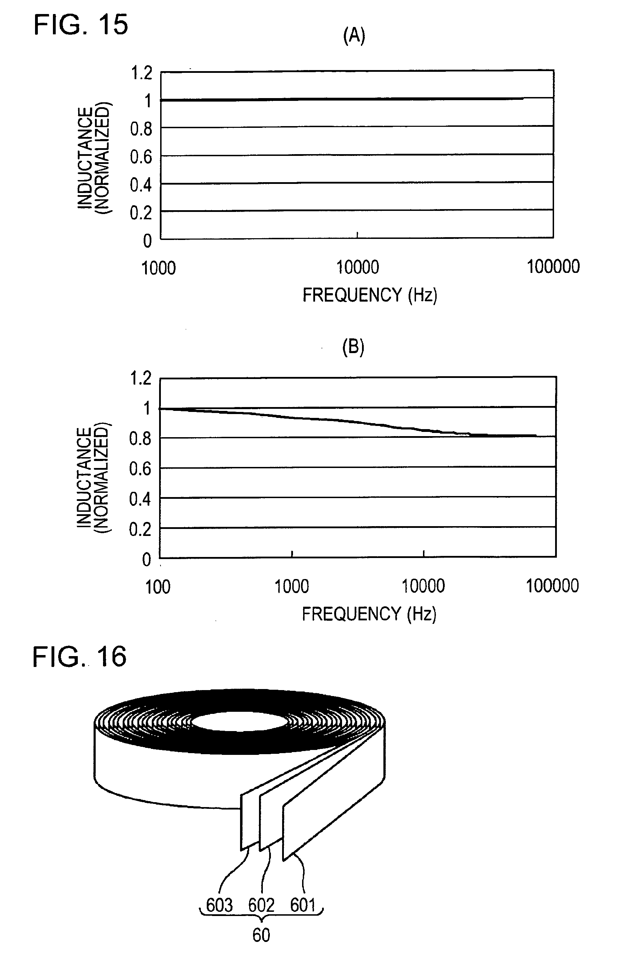

Fig. 10 illustrates an interconnected power system including a composite wound element for a noise-cut filter according to a fifth or sixth embodiment. Fig. 11 shows sectional views illustrating the structure of a composite wound element for a noise-cut filter according to the fifth embodiment. Fig. 11(A) is a vertical sectional view including a central axis of coils 40 taken along a direction of the central axis. Fig. 11(B) is a cross sectional view taken along a horizontal plane having the direction of the central axis as the normal direction. Fig. 12 illustrates a magnetic field in the composite wound element for a noise-cut filter according to the fifth embodiment. Fig. 13 shows sectional views illustrating the structure of a composite wound element for a noise-cut filter according to the sixth embodiment. Fig. 13(A) is a vertical sectional view including a central axis of coils 50 taken along a direction of the central axis. Fig. 13(B) is a cross sectional view taken along a horizontal plane having the direction of the central axis as the normal direction. Fig. 14 illustrates a magnetic field in the composite wound element for a noise-cut filter according to the sixth embodiment. Fig. 14(A) illustrates the case in which currents flow through a first outer coil 501 and a second inner coil 502 in the same direction; Fig. 14(B) illustrates the case in which currents flow through the first outer coil 501 and the second inner coil 502 in the opposite directions. Fig. 15 shows graphs for explaining the inductance characteristic of the composite wound element for a noise-cut filter according to the fifth embodiment. Fig. 15(A) shows the inductance characteristic of the composite wound element for a noise-cut filter according to the fifth embodiment. Fig. 15(B) shows the inductance characteristic of a wound element for a noise-cut filter of the related art.

Composite wound elements Da and Db for noise-cut filters according to the fifth and sixth embodiments are suitable for use in a noise-cut filter unit interposed between a direct-current power source and an alternating-current power system or between the direct-current power source and an alternating-current load. The composite wound elements Da and Db include pluralities of coils 40 (401 and 402) and 50 (501 and 502); and magnetic coupling members 2b for magnetically coupling the coils 40 (401 and 402) and 50 (501 and 502). The coils 40 (401 and 402) and 50 (501 and 502) are each formed by winding a belt-shaped conductive member such that the width direction of the conductive member extends along the axial direction of the coils 40 (401 and 402) and 50 (501 and 502), and are enclosed in the magnetic coupling members 2b. The magnetic coupling members 2b are magnetically isotropic, and are formed of soft magnetic powder. The thickness of each conductive member in the coils 40 (401 and 402) and 50 (501 and 502) is less than or equal to 1/3 of the skin depth at the frequency of the alternating-current power applied to the noise-cut filter unit. In the following description, first, the interconnected power system including the composite wound element Da or Db for a noise-cut filter according to the fifth or sixth embodiment will be explained. Next, the composite wound element Da for a noise-cut filter according to the fifth embodiment will be explained. Then, the composite wound element Db for a noise-cut filter according to the sixth embodiment will be explained.

Referring to Fig. 10, an interconnected power system PS according to the fifth and sixth embodiments includes a direct-current power source SDC, a boosting circuit BC, an inverter circuit IV, a noise-cut filter circuit NCF, and an alternating-current power system SAC.

The direct-current power source SDC is a power source circuit for supplying direct-current power at a predetermined first voltage value. The direct-current power source SDC is, for example, a solar cell, a fuel cell, or a secondary battery.

The boosting circuit BC is connected to the direct-current power source SDC, and increases the voltage of the direct-current power supplied from the direct-current power source SDC to a predetermined second voltage value. The boosting circuit BC includes, for example, a capacitor C1, a coil L0, a diode Di, a switching element SW0, and a capacitor C2. The capacitor C1 is arranged in the boosting circuit BC such that the capacitor C1 is connected in parallel with the direct-current power source SDC when the direct-current power source SDC is connected to the boosting circuit BC. The coil L0 is connected in series with the switching element SW0, and the coil L0 and the switching element SW0 that are connected in series are connected in parallel with the capacitor C1. The switching element SW0 is the switching element SW0 is, for example, a transistor. The cathode of the diode Di is connected to the connection point between the coil L0 and the switching element SW0. One end of the capacitor C2 is connected to the anode of the diode Di, and the other end of the capacitor C2 is connected to an end of the switching element SW0 that is not connected to the coil L0. In other words, both ends of the capacitor C2 are connected to the respective ends of a series circuit including the diode Di and the switching element SW0. The ends of the capacitor C2 serve as output ends of the boosting circuit BC.

In the boosting circuit BC having the above-described structure, the switching element SW0 is repeatedly turned on and off at a predetermined timing so that the voltage of the direct-current power supplied from the direct-current power source SDC is increased from the first voltage value to the second voltage value.

The inverter circuit IV is a direct current-alternating current converting circuit that is connected to the boosting circuit BC and that converts the direct-current power supplied from the direct-current power source SDC through the boosting circuit BC into alternating-current power at a predetermined frequency. In the case where the alternating-current power system is a commercial power network, the predetermined frequency is set to a so-called commercial power frequency (50 Hz or 60 Hz). The inverter circuit IV is, for example, a bridge circuit (H circuit) including four switching elements SW1 to SW4. More specifically, in the inverter circuit IV, the switching elements SW1 and SW3 are connected to each other in series, and the switching elements SW2 and SW4 are connected to each other in series. The set of the switching elements SW1 and SW3 connected in series and the set of the switching elements SW1 and SW3 connected in series are connected to each other in parallel between both terminals of the boosting circuit BC (plus and minus terminals, both terminals of the direct-current power source SDC). In this inverter circuit IV, the connection point between the switching elements SW1 and SW3 and the connection point between the switching elements SW2 and SW4 serve as a pair of output terminals of the inverter circuit IV. The switching elements SW1 to SW4 are, for example, transistors.

In the inverter circuit IV having the above-described structure, the switching elements SW1 and SW4 that are diagonal to each other are turned on and the switching elements SW2 and SW3 that are diagonal to each other are turned off at a predetermined timing. Then, the switching elements SW1 and SW4 are turned off and the switching elements SW2 and SW3 are turned on at the next predetermined timing. These steps are repeated. Thus, the direct-current power supplied from the direct-current power source SDC is converted into the alternating-current power, and is output.

The noise-cut filter circuit (power-source line filter circuit) NCF is a low-pass filter that is connected to the inverter circuit IV to filter out high-frequency noises (so-called switching noises) that are superposed on the alternating-current power obtained as a result of the direct current-alternating current conversion performed by the inverter circuit IV. The high-frequency noises are filtered out at a predetermined cutoff frequency. The noise-cut filter circuit NCF includes, for example, a pair of choke coils (inductors) L1 and L2 that are individually connected in series to the pair of output terminals and capacitors C3 and C4 that are connected to each other in series between the pair of choke coils L1 and L2 at the output side. The connection line between the capacitors C3 and C4 serves as a terminal TN of a neutral line, and is generally grounded. A terminal TE1 of the capacitor C3 that is not connected to the capacitor C4 serves as a voltage line, and a terminal TE2 of the capacitor C4 that is not connected to the capacitor C3 also serves as a voltage line. Alternating-current power of 200 V, for example, is output between the terminal TE1 of the capacitor C3 and the terminal TE2 of the capacitor C4 as an output of the noise-cut filter circuit. In the present embodiment, sub coils 401 and 402 of the coils 40 in the composite wound element Da for a noise-cut filter according to the fifth embodiment or sub coils 501 and 502 of the coils 50 in the composite wound element Db for a noise-cut filter according to the sixth embodiment are used as the pair of choke coils L1 and L2. The fifth and sixth embodiments will be described below. The noise-cut filter circuit NCF is also capable of cutting high-frequency noises that are transmitted from the alternating-current power system SAC toward the inverter circuit IV.

The alternating-current power system SAC is a distribution system that is connected to the noise-cut filter circuit NCF and supplies the power to predetermined power receiving facilities. The alternating-current power system SAC may additionally include, for example, a power generation unit and a power transformation unit. The interconnected power system PS may include, for example, an alternating-current load LD, such as an alternating-current motor, instead of the alternating-current power system SAC.

A composite wound element for a noise-cut filter is used as the choke coils L1 and L2 in the noise-cut filter circuit NCF included in the interconnected power system PS. The composite wound element may be, for example, the composite wound element Da for a noise-cut filter according to the fifth embodiment illustrated in Fig. 11 or the composite wound element Db for a noise-cut filter according to the sixth embodiment illustrated in Fig. 13.

As illustrated in Fig. 11, the composite wound element Da for a noise-cut filter according to the fifth embodiment includes, for example, the coils 40 and the magnetic coupling member 2b.

The magnetic coupling member 2b magnetically couples the coils 40, and is configured to enclose the coils 40. In the example illustrated in Fig. 11, the magnetic coupling member 2b includes a first magnetic coupling member 21 that is arranged to cover the outer periphery of the coils 40, second and third magnetic coupling members 22 and 23 that are connected to the first magnetic coupling member 21 so as to cover both end portions of the coils 40, and a fourth magnetic coupling member 24 disposed at the core of the coils 40. Thus, the magnetic coupling member 2b includes the fourth magnetic coupling member 24 in addition to the first to third magnetic coupling members 21 to 23 that are substantially similar to the first to third magnetic coupling members 21 to 23 in the magnetic coupling member 2a according to the first embodiment. Therefore, explanations of the first to third magnetic coupling members 21 to 23 will be omitted here. The coils 40 are cored coils having the fourth magnetic coupling member 24 at the core thereof, and are surrounded by the first to third magnetic coupling members 21 to 23. Thus, the composite wound element Da for a noise-cut filter according to the fifth embodiment has a so-called pot-shaped structure. The fourth magnetic coupling member 24 has a columnar body with a diameter smaller than the inner diameter of the coils 40. Both ends of the fourth magnetic coupling member 24 are connected to the second and third magnetic coupling members 22 and 23. In the present embodiment, the first to fourth magnetic coupling members 21 to 24 are magnetically isotropic, and are formed of soft magnetic powder.

In the example illustrated in Fig. 11, the coils 40 include two coils, which are a first upper coil 401 and a second lower coil 402. The first upper coil 401 and the second lower coil 402 are used as the choke coils L1 and L2. Each of the first upper coil 401 and the second lower coil 402 is formed by winding a long conductive member a predetermined number of turns, and generates a magnetic field when electricity is applied thereto. Similar to the coils 1 in the transformer Tra according to the first embodiment, the first upper coil 401 and the second lower coil 402 are each formed by winding a belt-shaped conductive member such that the width direction of the conductive member extends along the axial direction of the coils 40 (401 and 402). In other words, the coils 401 and 402 have a flatwise winding structure. In the present embodiment, the first upper coil 401 and the second lower coil 402 are stacked in the axial direction of the coils 40 (401 and 402) with an insulating member 6 interposed therebetween. The insulating member 6 is a film-shaped (sheet-shaped) member for electrically insulating the first upper coil 401 and the second lower coil 402 from each other.

In the composite wound element Da for a noise-cut filter according to the fifth embodiment, similar to the transformer Tra of the first embodiment, the inner surface of the second magnetic coupling member 22, which faces a first end portion of the coils 40 (401 and 402) in the axial direction, and the inner surface of the third magnetic coupling member 23, which faces a second end portion of the coils 40 (401 and 402) in the axial direction, are arranged parallel to each other at least in the area where they cover the first and second end portions of the coils 40 (401 and 402). In other words, the inner surface of the second magnetic coupling member 22, which faces a first end portion of the first upper coil 401 in the axial direction at the side opposite to the lamination surface, and the inner surface of the third magnetic coupling member 23, which faces a second end portion of the second lower coil 402 in the axial direction at the side opposite to the lamination surface, are arranged parallel to each other at least in the area where they cover the first and second end portions. The insulating member 6 is interposed also between the first end portion of the first upper coil 401 and the inner surface of the second magnetic coupling member 22 that faces the first end portion, and between the second end portion of the second lower coil 402 and the inner surface of the third magnetic coupling member 23 that faces the second end portion.

The first upper coil 401 of the coils 40 is connected to terminals 403a and 403b at both ends thereof. The first upper coil 401 receives electricity from the outside through the terminals 403a and 403b. The terminals 403a and 403b extend to the outside of the second magnetic coupling member 22 through holes formed in the second magnetic coupling member 22. The second lower coil 402 of the coils 40 is connected to terminals 403c and 403d at both ends thereof. The second lower coil 402 receives electricity from the outside through the terminals 403c and 403d. The terminals 403c and 403d extend to the outside of the third magnetic coupling member 23 through holes formed in the third magnetic coupling member 23.

In general, so-called normal-mode noise that passes through signal lines (power source lines) and common-mode noise that passes through ground lines are known. In the composite wound element Da for a noise-cut filter according to the fifth embodiment, the first upper coil 401 may be wound counterclockwise and the second lower coil 402 may be wound clockwise. In this case, a common-mode current flows through the first upper coil 401 in the direction from the terminal 403a to the terminal 403b, and flows through the second lower coil 402 in the direction from the terminal 403c to the terminal 403d. Thus, the current flows in the opposite directions. Therefore, in the composite wound element Da for a noise-cut filter, when the common-mode current is applied, magnetic fluxes that pass through the first upper coil 401 and the second lower coil 402, which are vertically stacked, cancel each other and basically no inductance is generated. On the other hand, a normal-mode current flows through the first upper coil 401 in the direction from the terminal 403a to the terminal 403b, and flows through the second lower coil 402 in the direction from the terminal 403d to the terminal 403c. Thus, the current flows in the same direction. Therefore, in the composite wound element Da for a noise-cut filter, when the normal-mode current is applied, magnetic fluxes that pass through the first upper coil 401 and the second lower coil 402, which are vertically stacked, enhance each other. As a result, an inductance for cancelling the magnetic flux variation is generated and the composite wound element Da functions as a filter. Fig. 12 shows lines of magnetic induction in the composite wound element Da for a noise-cut filter according to the fifth embodiment in the case where the composite wound element Da functions as a normal-mode filter. As is clear from Fig. 12, the first upper coil 401 and the second lower coil 402, which are vertically stacked, function integrally as a magnetic circuit owing to the magnetic coupling member 2b. When a current flows through the first upper coil 401 and the second lower coil 402, which are vertically stacked, in the same direction, the magnetic fluxes that pass through the first upper coil 401 and the second lower coil 402 enhance each other, and some of the lines of magnetic induction pass through the first upper coil 401 and the second lower coil 402. In Fig. 12, the first upper coil 401 and the second lower coil 402 are wound the same number of turns.

As illustrated in Fig. 13, the composite wound element Db for a noise-cut filter according to the sixth embodiment includes the coils 50 and the magnetic coupling member 2b that encloses the coils 50. The magnetic coupling member 2b, which fills the core of the coils 50 and surrounds the coils 50, is similar to that in the fifth embodiment except for holes through which terminals of the coils 50 extend. Therefore, explanations of the magnetic coupling member 2b will be omitted.

In the example illustrated in Fig. 13, the coils 50 include two coils, which are a first outer coil 501 and a second inner coil 502. The first outer coil 501 and the second inner coil 502 are used as the choke coils L1 and L2. Each of the first outer coil 501 and the second inner coil 502 is formed by winding a long conductive member a predetermined number of turns, and generates a magnetic field when electricity is applied thereto. Similar to the coils 1 in the transformer Tra according to the first embodiment, the first outer coil 501 and the second inner coil 502 are each formed by winding a belt-shaped conductive member such that the width direction of the conductive member extends along the axial direction of the coils 50 (501 and 502). In other words, the coils 501 and 502 have a flatwise winding structure. In the present embodiment, the first outer coil 501 and the second inner coil 502 are stacked in the radial direction of the coils 50 (501 and 502) with an insulating member 6 interposed therebetween. In the example illustrated in Fig. 13, the first outer coil 501 is disposed in a relatively outer region and the second inner coil 502 is disposed in a relatively inner region. The insulating member 6 is a film-shaped (sheet-shaped) member for electrically insulating the first outer coil 501 and the second inner coil 502 from each other.

In the composite wound element Db for a noise-cut filter according to the sixth embodiment, similar to the transformer Tra of the first embodiment, the inner surface of the second magnetic coupling member 22, which faces first end portions of the coils 50 (501 and 502) in the axial direction, and the inner surface of the third magnetic coupling member 23, which faces second end portions of the coils 50 (501 and 502) in the axial direction, are arranged parallel to each other at least in the area where they cover the first and second end portions of the coils 50 (501 and 502). In other words, the inner surface of the second magnetic coupling member 22, which faces first end portions of the first outer coil 501 and the second inner coil 502 in the axial direction, and the inner surface of the third magnetic coupling member 23, which faces second end portions of the first outer coil 501 and the second inner coil 502 in the axial direction, are arranged parallel to each other at least in the area where they cover the first and second end portions. The insulating member 6 is interposed also between the first end portions and the inner surface of the second magnetic coupling member 22 that faces the first end portions, and between the second end portions and the inner surface of the third magnetic coupling member 23 that faces the second end portions.

The first outer coil 501 of the coils 50 (501 and 502) is connected to terminals 503a and 503b at both ends thereof. The first outer coil 501 receives electricity from the outside through the terminals 503a and 503b. The terminals 503a and 503b extend to the outside of the second magnetic coupling member 22 through holes formed in the second magnetic coupling member 22. The second inner coil 502 of the coils 50 is connected to terminals 503c and 503d at both ends thereof. The second inner coil 502 receives electricity from the outside through the terminals 503c and 503d. The terminals 503c and 503d extend to the outside of the second magnetic coupling member 22 through holes formed in the second magnetic coupling member 22.

In the composite wound element Db for a noise-cut filter according to the sixth embodiment, the first outer coil 501 and the second inner coil 502, which are radially stacked, function integrally as a magnetic circuit owing to the magnetic coupling member 2b. Fig. 14(A) shows the magnetic lines of force generated when a current flows through the first outer coil 501 and the second inner coil 502, which are radially stacked, in the same direction. In this case, the composite wound element Db functions as a normal-mode filter. Fig. 14(B) shows the lines of magnetic induction generated when a current flows through the first outer coil 501 and the second inner coil 502, which are radially stacked, in the opposite directions. In this case, the composite wound element Db functions as a common-mode filter. In Fig. 14, the first outer coil 501 and the second inner coil 502 are wound the same number of turns.

Similar to the transformer Tra according to the first embodiment, the composite wound elements Da and Db for noise-cut filters according to the fifth and sixth embodiments can be easily produced compared to those of the related art.

In the composite wound elements Da and Db for noise-cut filters according to the fifth and sixth embodiments, the coils 40 and 50 are formed by winding relatively thin tape-shaped wire members into a flatwise winding structure. Therefore, the eddy current loss can be reduced and the inductance is relatively constant with respect to a frequency change. For example, in the structure of the related art, that is, in the structure in which coils are wound around opposite side portions of a substantially rectangular-ring-shaped core, the inductance characteristic is such that the inductance decreases as the frequency increases, as illustrated in Fig. 15(B). The inductance at 10 kHz is lower than the inductance at 100 Hz by about 17%. In contrast, in an example of the composite wound element Da for a noise-cut filter according to the fifth embodiment, the inductance characteristic is such that the inductance is substantially constant even when the frequency is changed, as illustrated in Fig. 15(A). The inductance at 10 kHz is lower than the inductance at 100 Hz by less than about 1%.

The composite wound elements Da and Db for noise-cut filters according to the fifth and sixth embodiments include the magnetic coupling members 2b that enclose the coils 40 (401 and 402) and 50 (501 and 502), and have a so-called pot-shaped gapless structure. Therefore, leakage of the magnetic flux to the outside can be reduced. The coils 40 (401 and 402) and the coils 50 (501 and 502) are indirectly connected in series with the alternating-current power system or the alternating-current load SAC interposed therebetween, and reduction in the coupling coefficient between the coils 401 and 402 in the coils 40 and between the coils 501 and 502 in the coils 50 is suppressed. Accordingly, reduction in the inductance of each of the coils 401 and 402 and each of the coils 501 and 502 is suppressed. As a result, the inductance of each of the coils 401 and 402 and each of the coils 501 and 502 in the composite wound elements Da and Db for noise-cut filters according to the fifth and sixth embodiments is higher than that of the winding element according to the related art. For example, when the coupling coefficient of two coils is 0.66 and the inductance of each coil is 100 µH, the inductance of each coil will be about 330 µH when the coils are connected to each other in series. In contrast, in the composite wound elements Da and Db for noise-cut filters according to the fifth and sixth embodiments, the coupling coefficient is about 0.97. As a result, the inductance of each of the coils 401 and 402 and each of the coils 501 and 502 is about 395 µH, which is higher than the inductance in the former case.

In a solar cell power generation system in which a solar cell is used as the direct-current power source SDC, the current that flows through the composite wound elements Da and Db for noise-cut filters, that is, through the choke coils L1 and L2 in the present embodiment, is about 20 A on average and 30 A at maximum. Thus, the composite wound elements Da and Db for noise-cut filters are not required to operate over a large current range. Therefore, in the case where the direct-current power source SDC is a solar cell, the composite wound elements Da and Db for noise-cut filters may be designed to achieve a stable inductance characteristic when the current is around 20 A. Such composite wound elements Da and Db for noise-cut filters are suitable for use in a solar cell power generation system.

In the composite wound element Da for a noise-cut filter according to the fifth embodiment, the first upper coil 401 and the second lower coil 402 are stacked in the axial direction. Accordingly, a composite wound element for a noise-cut filter with a small diameter can be provided.

In the composite wound element Db for a noise-cut filter according to the sixth embodiment, the first outer coil 501 and the second inner coil 502 are stacked in the radial direction. Accordingly, a composite wound element for a noise-cut filter with a small dimension in the axial direction can be provided.

In the coils 1, 10, 20, 30, 40, and 50 according to the first to sixth embodiments, each conductive member may further include a soft magnetic body arranged at a side surface that is orthogonal to the axial direction of the coils 1, 10, 20, 30, 40, and 50. In this structure, since the soft magnetic body is arranged at a side surface of each conductive member that is orthogonal to the axial direction, the magnetic permeability of the coils 1, 10, 20, 30, 40, and 50 is increased and the inductance can be increased accordingly. As a result, loss can be reduced. Therefore, when the coils 1, 10, 20, 30, 40, and 50 having the above-described structure are used, reactors and transformers, for example, having high inductance and low loss can be provided.

Fig. 16 illustrates the structure of a coil portion according to a modification. Fig. 16 shows a coil 60 as an example of the coils 1, 10, 20, 30, 40, and 50 having the above-described structure.

More specifically, as illustrated in Fig. 16, the coil 60, which is an example of the coils 1, 10, 20, 30, 40, and 50 according to the modification, includes a long belt-shaped conductive member 601 made of a predetermined material; a soft magnetic body 602 made of a predetermined material and arranged on a side surface of the conductive member 601 that is orthogonal to the axial direction; and an insulating member 603 made of a predetermined material and arranged on the soft magnetic body 602 on the side surface of the conductive member 601 that is orthogonal to the axial direction. The conductive member 601, the soft magnetic body 602, and the insulating member 603 are successively stacked on each other and wound together. In other words, the conductive member 601, the soft magnetic body 602, and the insulating member 603 are successively placed on top of each other and are spirally wound together.

With regard to the first embodiment, coils according to the modification of the coils 1 of the first embodiment are formed by successively stacking and winding three members that are each formed by successively stacking the conductive member 601, the soft magnetic body 602, and the insulating member 603. With regard to the second embodiment, coils according to the modification of the coils 10 of the second embodiment are formed by stacking, in the axial direction, two coils that are each formed by successively stacking and winding the conductive member 601, the soft magnetic body 602, and the insulating member 603. With regard to the third embodiment, coils according to the modification of the coils 20 of the third embodiment are formed by stacking, in the radial direction, two coils that are each formed by successively stacking and winding the conductive member 601, the soft magnetic body 602, and the insulating member 603. Coils according to the modification of the coils 30, 40, and 50 of the other embodiments may also be formed by similar methods.

For example, the soft magnetic body 602 may be arranged on a side surface of the conductive member 601 by placing, on a piece of long belt-like copper tape, a similar piece of long belt-like iron tape and a similar piece of long belt-like tape of an insulating member. Alternatively, for example, the soft magnetic body 602 may be arranged on a side surface of the conductive member 601 by forming a coating on the conductive member 601 by plating (e.g., electroplating), vapor deposition, or the like. For example, copper tape may be plated with iron. Alternatively, for example, the soft magnetic body 602 may be arranged on a side surface of the conductive member 601 by pressure bonding, such as thermocompression bonding. For example, a piece of tape in which copper and iron are pressure-bonded together may be formed by placing pieces of copper tape and iron tape on top of each other and heating them under a load. In the above-described examples, copper is an example of the conductive member 601, and iron is an example of the soft magnetic body 602. The electrical conductivity of copper is higher than that of iron by about one order of magnitude. Therefore, in the copper tape having an iron layer (thin film) on a side surface thereof, the current mainly flows through the copper portion. Although the soft magnetic body 602 is directly arranged on the side surface of the conductive member 601 in the above-described examples, the soft magnetic body 602 may instead be indirectly arranged on the side surface of the conductive member 601 with an insulating member interposed therebetween.

The thickness of the soft magnetic body 602 (thickness of the soft magnetic body 602 in a direction orthogonal to the axial direction) is preferably less than or equal the skin depth δ at the frequency of the alternating-current power applied to the coil 60. In such a case, the eddy current loss can be reduced.

The width (dimension in the axial direction) of the conductive member 601 and the width (dimension in the axial direction) of the soft magnetic body 602 may either be the same as (equal to) each other or different from each other. Preferably, the width of the soft magnetic body 602 is larger than that of the conductive member 601 so that both end portions of the soft magnetic body 602 come into contact with the magnetic coupling member 2 (2a, 2b).

In the first to sixth embodiments, it is necessary to increase the winding number (number of turns) of the coils 1, 10, 20, 30, 40, and 50 to increase the inductance thereof. In such a case, larger conductive members are required and the size of the device will be increased. However, the increase in the sizes of the conductive members and the device can be suppressed by using the structure of the above-described modification. For example, in the case where the coils are formed of pieces of copper tape, the inductance of the coils can be increased simply by using a pure iron material, which is relatively inexpensive. Since the soft magnetic body 602 is arranged in the coils 1, 10, 20, 30, 40, and 50 according to the modification, the lines of magnetic induction are also distributed over the coils 1, 10, 20, 30, 40, and 50. Therefore, the magnetic flux density decreases and an increase in the hysteresis loss unique to the pure iron material can be effectively suppressed. Thus, the loss can be reduced. As a result, reactors and transformers, for example, having high inductance and low loss can be provided.

In this modification, in the case where the coils are formed as cored coils having the core filled with the magnetic coupling member, the magnetic permeability of the magnetic coupling member is preferably equivalent to the average magnetic permeability of the coil portion including the soft magnetic body. The magnetic coupling member having such a magnetic permeability may be formed by, for example, compacting the above-described soft magnetic powder. In the case where such a magnetic coupling member is provided at the core, even when the coils are formed as cored coils, the lines of magnetic induction can be distributed over the coils 1, 10, 20, 30, 40, and 50 and an increase in the hysteresis loss unique to the pure iron material can be suppressed.

The present description discloses techniques of various aspects as explained above. Some of the major techniques will now be summarized.

According to an aspect, a composite wound element includes a plurality of coils and a magnetic coupling member for magnetically coupling the coils. The coils are each formed by winding a belt-shaped conductive member such that a width direction of the conductive member extends along an axial direction of the coils, and are enclosed in the magnetic coupling member.

With this structure, the magnetic coupling member surrounds the coils so that the coils are enclosed therein. Unlike the related art, it is not necessary to wind the coils around the magnetic coupling member, which corresponds to the core according to the related art. Therefore, the composite wound element having the above-described structure can be more easily produced compared to that of the related art. In addition, with this structure, the magnetic coupling member surrounds the coils so that the coils are enclosed therein, and the magnetic flux leaks into the inner space of the magnetic coupling member. Therefore, the number of magnetic flux that is generated by the coils and passes through the magnetic coupling member is reduced. As a result, in the composite wound element having the above-described structure, the core loss (hysteresis loss) can be reduced. Therefore, even when the magnetic coupling member is formed of, for example, soft magnetic powder that causes a higher core loss than silicon steel plates, the core loss can be reduced. In addition, with the above-described structure, the coils are each formed by winding long belt-shaped conductive members such that the width direction of the conductive member extends along the axial direction of the coils. Therefore, in the case where the magnetic coupling member is shaped so as to sandwich the coils with two planes having the axial direction of the coils as the normal direction, the conductive members in the coils may be arranged substantially along the direction of the magnetic flux that is formed in the magnetic coupling member. As a result, eddy current loss can be reduced in the composite wound element having the above-described structure.

According to another aspect, a transformer is formed of the above-described composite wound element. With this structure, a transformer that can be more easily produced compared to that of the related art can be provided.

According to another aspect, in the above-described transformer, a thickness of each conductive member is preferably less than or equal to 1/3 of a skin depth at a frequency of alternating-current power applied to the transformer.

In the transformer having such a structure, since the thickness of each conductive member is less than or equal to one-third of the skin depth at the frequency of the alternating-current power, the eddy current loss can be reduced. When the angular frequency of the alternating-current power is ω, the magnetic permeability of the conductive members is µ, and the electrical conductivity of the conductive members is ρ, the skin depth δ is generally defined as δ= (2/ωµp)1/2 .

According to another aspect, preferably, the above-described transformer further includes a polymer material that fills a gap between the magnetic coupling member and the coils.

With this structure, since the gap is filled with the polymer material, heat generated by the coils can be transmitted to the magnetic coupling member that surrounds the coils through the polymer material. Accordingly, the heat dissipation effect can be improved. In the transformer having such a structure, the polymer material also contributes to improving the insulation performance. In addition, in the transformer having such a structure, the coils are substantially fixed to the magnetic coupling member by the polymer material, so that vibration due to magnetostriction can be prevented.

According to another aspect, in the above-described transformer, the coils are preferably formed by winding a plurality of belt-shaped conductive members that are stacked together with an insulating member interposed therebetween.

With this structure, since the coils are formed by winding the belt-shaped conductive members that are stacked together with the insulating member interposed therebetween, the coils can be formed by a single winding process. Accordingly, the transformer having the above-described structure can be easily produced.

According to another aspect, in the above-described transformer, when m and n are different integers of 1 or more, the coils 1 are preferably formed by winding m+n belt-shaped conductive members that are stacked together with the insulating member interposed therebetween. The m conductive members are connected in series when m is 2 or more, and the n conductive members are connected in series when n is 2 or more.

With this structure, the coils form two (m:n) coils. Accordingly, the voltage ratio between the two coils in the transformer having the above-described structure can be set to m:n, and a transformer having a voltage ratio of m:n can be provided.

According to another aspect, in the transformer having the above-described structure, the ratio of a thickness of the m conductive members to a thickness of the n conductive members is preferably n:m.

With this structure, mx(thickness of the m conductive members) is equal to nx(thickness of the n conductive members), and the coils have the same thickness. Thus, a transformer including coils having the same thickness is provided.

According to another aspect, in the above-described transformer, the coils are preferably stacked in the axial direction of the coils. With this structure, a transformer in which coils are stacked in the axial direction can be provided.

According to another aspect, in the above-described transformer, the coils are preferably stacked in a radial direction of the coils. With this structure, a transformer in which coils are stacked in the radial direction can be provided.

According to another aspect, in the above-described transformer, the magnetic coupling member is preferably formed of soft magnetic powder.

In the transformer having the above-described structure, since the magnetic coupling member is formed of soft magnetic powder, the magnetic coupling member can be easily formed and the core loss can be reduced.

According to another aspect, in the above-described transformer, each conductive member preferably further includes a soft magnetic body arranged at a side surface that is orthogonal to the axial direction.

With this structure, since the soft magnetic body is arranged at a side surface of each conductive member that is orthogonal to the axial direction, the magnetic permeability of the coils is increased and the inductance can be increased accordingly. As a result, loss can be reduced.

According to another aspect, a transformation system includes a plurality of transformers connected in series. At least one of the transformers is any one of the above-described transformers.

With this structure, a transformation system including the above-described transformer is provided. In addition, with this structure, since a plurality of transformers are provided, voltage transformation can be successively performed by the transformers, so that a voltage applied to each transformer is reduced. Accordingly, load applied to each transformer is reduced.

According to another aspect, a composite wound element for a noise-cut filter for use in a noise-cut filter unit interposed between a direct-current power source and an alternating-current power system or between the direct-current power source and an alternating-current load is formed of the above-described composite wound element. The magnetic coupling member is magnetically isotropic, and is formed of soft magnetic powder. A thickness of the conductive member in each coil is less than or equal to 1/3 of a skin depth at a frequency of alternating-current power applied to the noise-cut filter unit.

With this structure, a composite wound element for a noise-cut filter can be provided which can be easily produced compared to that of the related art and with which the eddy current loss can be reduced and the inductance is constant with respect to a frequency change. The composite wound element for a noise-cut filter having the above-described structure includes the magnetic coupling member that encloses the coils and has a so-called pot-shaped gapless structure. Therefore, leakage of the magnetic flux can be reduced. In the case where the wound elements are indirectly connected in series with the alternating-current power system or the alternating-current load interposed therebetween, reduction in the coupling coefficient between the wound elements can be suppressed. Accordingly, reduction in the inductance of each of the wound elements can also be suppressed. As a result, the inductance of each of the wound elements in the composite wound element for a noise-cut filter having the above-described structure is higher than that of the winding element according to the related art.

According to another aspect, in the above-described composite wound element for a noise-cut filter, the coils are preferably stacked in the axial direction of the coils.

With this structure, a composite wound element for a noise-cut filter in which coils are stacked in the axial direction can be provided.

According to another aspect, in the above-described composite wound element for a noise-cut filter, the coils are preferably stacked in a radial direction of the coils.

With this structure, a composite wound element for a noise-cut filter in which coils are stacked in the radial direction can be provided.

According to another aspect, in the above-described composite wound element, each conductive member may further include a soft magnetic body arranged at a side surface that is orthogonal to the axial direction.

With this structure, since the soft magnetic body is arranged at a side surface of each conductive member that is orthogonal to the axial direction, the magnetic permeability of the coils is increased and the inductance can be increased accordingly. As a result, loss can be reduced. Thus, reactors and transformers, for example, with low loss can be provided by using the composite wound element having the above-described structure.

According to another aspect, in the above-described composite wound element, a thickness of the soft magnetic body in a direction orthogonal to the axial direction is preferably less than or equal to a skin depth at a frequency of alternating-current power applied to the composite wound element. With this structure, the eddy current loss can be reduced.

According to another aspect, in the above-described composite wound element, each conductive member is preferably coated with the soft magnetic body.

With this structure, the composite wound element in which the soft magnetic body is arranged at a side surface of each conductive member that is orthogonal to the axial direction can be easily produced by winding the conductive member that is coated with the soft magnetic body.

According to another aspect, in the above-described composite wound element, the soft magnetic body is preferably pressure bonded to each conductive member.

With this structure, the composite wound element in which the soft magnetic body is arranged at a side surface of each conductive member that is orthogonal to the axial direction can be easily produced by winding the conductive member to which the soft magnetic body is pressure bonded.

The present application is based on Japanese Patent Application No. 2010-1283 filed on January 6, 2010 and Japanese Patent Application No. 2010-189734 filed on August 26, 2010, the entire contents of which are incorporated herein by reference.

To describe the present invention, embodiments of the present invention have been properly and sufficiently explained with reference to the drawings. However, it should be recognized that a person skilled in the art can easily modify and/or improve the above-described embodiments. Therefore, it is to be understood that modifications and improvements made by a person skilled in the art are included in the scope of the claims unless the modifications and improvements are beyond the scope of the claims.

### Industrial Applicability

The present invention provides a composite wound element and a transformer using the same, a transformation system, and a composite wound element for a noise-cut filter.

## Claims

1. A composite wound element comprising:
a plurality of coils; and
a magnetic coupling member for magnetically coupling the coils,
wherein the coils are each formed by winding a belt-shaped conductive member such that a width direction of the conductive member extends along an axial direction of the coils, and are enclosed in the magnetic coupling member.

2. A transformer formed of the composite wound element according to Claim 1.

3. The transformer according to Claim 2,
wherein a thickness of each conductive member is less than or equal to 1/3 of a skin depth at a frequency of alternating-current power applied to the transformer.

4. The transformer according to Claim 2 or 3, further comprising:
a polymer material that fills a gap between the magnetic coupling member and the coils.

5. The transformer according to one of Claims 2 to 4,
wherein the coils are formed by winding a plurality of belt-shaped conductive members that are stacked together with an insulating member interposed therebetween.

6. The transformer according to Claim 5,
wherein, when m and n are different integers of 1 or more, the coils are formed by winding m+n belt-shaped conductive members that are stacked together with the insulating member interposed therebetween,
wherein the m conductive members are connected in series when m is 2 or more, and
wherein the n conductive members are connected in series when n is 2 or more.

7. The transformer according to Claim 6,
wherein the ratio of a thickness of the m conductive members to a thickness of the n conductive members is n:m.

8. The transformer according to one of Claims 2 to 4,
wherein the coils are stacked in the axial direction of the coils.

9. The transformer according to one of Claims 2 to 4,
wherein the coils are stacked in a radial direction of the coils.

10. The transformer according to one of Claims 2 to 9,
wherein the magnetic coupling member is formed of soft magnetic powder.

11. The transformer according to one of Claims 2 to 10,
wherein each conductive member further includes a soft magnetic body arranged at a side surface that is orthogonal to the axial direction.

12. A transformation system comprising:
a plurality of transformers connected in series,
wherein at least one of the transformers is the transformer according to one of Claims 2 to 11.

13. A composite wound element for a noise-cut filter for use in a noise-cut filter unit interposed between a direct-current power source and an alternating-current power system or between the direct-current power source and an alternating-current load, the composite wound element being formed of the composite wound element according to Claim 1,
wherein the magnetic coupling member is magnetically isotropic and is formed of soft magnetic powder, and
wherein a thickness of the conductive member in each coil is less than or equal to 1/3 of a skin depth at a frequency of alternating-current power applied to the noise-cut filter unit.

14. The composite wound element for a noise-cut filter according to Claim 13,
wherein the coils are stacked in the axial direction of the coils.

15. The composite wound element for a noise-cut filter according to Claim 13,
wherein the coils are stacked in a radial direction of the coils.

16. The composite wound element according to Claim 1,
wherein each conductive member further includes a soft magnetic body arranged at a side surface that is orthogonal to the axial direction.

17. The composite wound element according to Claim 16,
wherein a thickness of the soft magnetic body in a direction orthogonal to the axial direction is less than or equal to a skin depth at a frequency of alternating-current power applied to the composite wound element.

18. The composite wound element according to Claim 16 or 17,
wherein each conductive member is coated with the soft magnetic body.

19. The composite wound element according to Claim 16 or 17,
wherein the soft magnetic body is pressure bonded to each conductive member.
